# EUROPÄISCHE PATENTSCHRIFT

(11) **EP 1 905 144 B1**
(45) Veröffentlichungstag und Bekanntmachung des Hinweises auf die Patenterteilung: **04.04.2012**
(21) Anmeldenummer: 06792525.5
(22) Anmeldetag: 19.07.2006
(51) Int. Cl.: H02J 7/00

(54) **VERFAHREN ZUR SPANNUNGSVERSORGUNG EINER ANORDNUNG UND STEUERSCHALTUNG ZUR AUSFÜHRUNG DES VERFAHRENS**
METHOD FOR VOLTAGE SUPPLY TO A DEVICE AND A CONTROL CIRCUIT FOR CARRYING OUT SAID METHOD
PROCEDE D'ALIMENTATION ELECTRIQUE D'UN DISPOSITIF ET CIRCUIT DE COMMANDE POUR METTRE EN OEUVRE CE PROCEDE

(30) Priorität: 21.07.2005 DE 102005035365
(43) Veröffentlichungstag der Anmeldung: 02.04.2008
(73) Patentinhaber: Cinterion Wireless Modules GmbH, 81669 München (DE)
(72) Erfinder: BAHR, Michael, 12101 Berlin (DE); ROMAHN, Jörg, 12353 Berlin (DE)
(74) Vertreter: Eisenführ, Speiser & Partner
(86) Internationale Anmeldenummer: PCT/EP2006/064399
(87) Internationale Veröffentlichungsnummer: WO 2007/010000

(56) Entgegenhaltungen:
- EP-A- 1 313 196
- EP-A- 1 494 332

## Beschreibung

Die Erfindung betrifft ein Verfahren zur Spannungsversorgung einer Anordnung, eine Spannungsversorgungsanordnung und eine Steuerschaltung zur Ausführung des Verfahrens.

Es ist bekannt, dass Funkmodule, die beispielsweise gemäß der Mobilfunkstandards GSM, GPRS, EDGE, UMTS oder der Kurzstreckenfunkstandards BLUETOOTH, WLAN arbeiten, in elektronischen Geräten (Mobiltelefonen, so genannten Handhelds (Personal Digital Assistants) oder Wireless Access Points, auch allgemein als Applikation bezeichnet, enthalten sind. Die Funkmodule enthalten dabei alle wesentlichen elektronischen Baugruppen für die Abwicklung des Funkverkehrs über die Luftschnittstelle. Die Applikation kann weitere elektronische Baugruppen für Anzeigeeinheiten, Tastaturen, elektronische Spiele etc. enthalten.

Die Applikation (elektronisches Gerät) bzw. auch das Funkmodul kann dabei die notwendige Betriebsenergie aus verschiedenen Spannungsquellen beziehen. Bekannt sind beispielsweise Schaltnetzteile, Ladegeräte, Batterien, Standardakkumulatoren, Lithiumakkumulatoren und auch Kondensatoren. Als Spannungsversorgungskonzept zum Betreiben der Funkmodule (Applikationen, elektronischen Geräte) ist einerseits bekannt, Schaltnetzteile mit Schaltreglern oder andererseits Akkumulatoren und Ladegeräte mit Ladeschaltungen einzusetzen, die im letzteren Fall die sich während des Betriebes des Funkmoduls (Applikation, elektronischen Geräts) ständig entleerenden Akkumulatoren in bestimmten Zeitabständen wieder aufladen.

Als Ladeverfahren sind dem Fachmann einerseits so genannte analoge Ladeverfahren (Konstantstromladeverfahren, Konstantspannungsladeverfahren oder eine Mischung dieser beiden) bekannt, bei denen der Ladestrom dauerhaft fließt. Andererseits sind dem Fachmann auch so genannte digitale Ladeverfahren bekannt, bei denen der Ladevorgang gepulst abläuft und für kurze regelmäßige auftretende Zeitabschnitte hohe Ladeströme in den Akkumulator fließen.

Ein weiteres Problem der beschriebenen Spannungsversorgungskonzepte ist die Versorgung von Funkmodulen (Applikationen, elektronischen Geräten), die nach dem Zeitlagegetrenntverfahren (Time Division Multiple Access) arbeiten, mit dem erforderlichen hohen Impulsstrom im Sendezeitschlitz.

EP 1 494 332 A und EP 1 313 196 beschreiben jeweils eine Spannungsversorgungsanlage einer bestimmten Konfiguration zum Zuführen von Energie zu einem Last aufnehmenden System; diese sind noch verbesserbar.

Es ist daher die Aufgabe der vorliegenden Erfindung eine Steuerschaltung, eine Spannungsversorgungsanordnung und ein Verfahren zur Spannungsversorgung eines Moduls eines elektronischen Geräts, insbesondere eines Funkmodulsanzugeben, die den Betrieb des Moduls mit einer Vielzahl von Spannungsversorgern ermöglicht.

Die Aufgabe wird durch eine Steuerschaltung in einer ersten Variante gemäß dem Anspruch 1 und eine Steuerschaltung in einer zweiten Variante gemäß dem Anspruch 2 gelöst.

Die Erfindung führt auch auf eine Spannungsversorgungsanordnung gemäß der ersten Variante nach dem Anspruch 6 und gemäß der zweiten Variante nach dem Anspruch 9.

Die Erfindung führt auch auf ein Verfahren gemäß der ersten Variante nach dem Anspruch 10 und gemäß der zweiten Variante nach dem Anspruch 11.

Die Aufgabe wird erfindungsgemäß in einem ersten Fall durch ein Verfahren zur Spannungsversorgung einer Anordnung gelöst, die folgende Elemente aufweist:
- eine externe Spannungsquelle ist mit einem ersten Eingang einer Steuerschaltung verbunden,
- die externe Spannungsquelle ist mit einem ersten Schalter verbunden, - die externe Spannungsquelle ist mit einer Ladeschaltung verbunden,
- der erste Schalter ist mit einem Betriebsspannungsversorgungseingang eines Moduls verbunden,
- die Ladeschaltung ist mit einem als Lithiumakkumulator ausgebildeten internen elektrischen Energiespeicher verbunden,
- der interne elektrische Energiespeicher ist mit einem zweiten Eingang der Steuerschaltung verbunden,
- der interne elektrische Energiespeicher ist mit dem ersten Schalter und dem Betriebsspannungsversorgungseingang verbunden,
- der interne elektrische Energiespeicher ist mit einem Akkumulatortypelement verbunden,
- das Akkumulatortypelement ist mit einem dritten Eingang der Steuerschaltung verbunden.
- ein erster Ausgang der Steuerschaltung ist mit dem ersten Schalter verbunden, - ein zweiter Ausgang der Steuerschaltung ist mit der Ladeschaltung verbunden,
   wobei bei dem Verfahren
- die Steuerschaltung erkennt, ob die an dem ersten Eingang anliegende Spannung oberhalb oder unterhalb eines Schwellwertes liegt,
- die Steuerschaltung erkennt, dass ein interner elektrischer Energiespeicher mit dem zweiten Eingang der Steuerschaltung verbunden ist,
- die Steuerschaltung erkennt, dass ein Akkumulatortypelement mit dem dritten Eingang der Steuerschaltung verbunden ist, und
   wobei in diesem Fall,
- die Steuerschaltung den ersten Schalter ausschaltet und die Ladeschaltung sperrt, wenn die am ersten Eingang an- liegende Spannung unterhalb des Schwellwertes liegt, so dass die Betriebsspannung des Moduls aus dem Lithiumakkumulator und nicht aus der externen Spannungsquelle bezogen wird und
- die Steuerschaltung den ersten Schalter ausschaltet und die Ladeschaltung aktiviert, wenn die am ersten Eingang anliegende Spannung oberhalb des Schwellwertes liegt, so dass der Lithiumakkumulator während des Betriebs des Moduls durch die externe Spannungsquelle mittels der Ladeschaltung geladen wird.

Dadurch kann die Spannungsversorgung des Moduls mit einem Schaltnetzteil, einem Ladegerät und einem Lithiumakkumulator als internem elektrischem Energiespeicher erfolgen.

Die Aufgabe wird erfindungsgemäß in einem zweiten Fall durch ein Verfahren zur Spannungsversorgung einer Anordnung gelöst, die folgende Elemente aufweist:
- eine externe Spannungsquelle ist mit einem ersten Eingang einer Steuerschaltung verbunden,
- die externe Spannungsquelle ist mit einem ersten Schalter verbunden, - der erste Schalter ist mit einem Betriebsspannungsversorgungseingang eines Moduls verbunden,
- ein als Kondensator ausgebildeter interner elektrischer Energiespeicher ist mit einem zweiten Eingang der Steuerschaltung verbunden, - der interne elektrische Energiespeicher ist mit dem ersten Schalter und dem Betriebsspannungsversorgungseingang verbunden,
- ein erster Ausgang der Steuerschaltung ist mit dem ersten Schalter verbunden, wobei bei dem Verfahren
- die Steuerschaltung erkennt, ob die an dem ersten Eingang anliegende Spannung oberhalb oder unterhalb eines Schwellwertes liegt,
- die Steuerschaltung erkennt, dass ein interner elektrischer Energiespeicher mit dem zweiten Eingang der Steuerschaltung verbunden ist,
- die Steuerschaltung erkennt, dass kein Akkumulatortypelement mit dem dritten Eingang der Steuerschaltung verbunden ist, und wobei in diesem Fall,
- die Steuerschaltung den ersten Schalter einschaltet, wenn die am ersten Eingang anliegende Spannung unterhalb des Schwellwertes liegt und
- den ersten Schalter ausschaltet, wenn die am ersten Eingang anliegende Spannung oberhalb des Schwellwertes liegt, so dass im letzteren Unterfall das Modul nicht mit Betriebsspannung aus der externen Spannungsquelle versorgt wird.

Dadurch kann die Spannungsversorgung des Moduls mit einem Schaltnetzteil und einem Kondensator als internem elektrischem Energiespeicher an Stelle eines Akkumulators oder einer Batterie erfolgen.

Die Aufgabe wird erfindungsgemäß in einem dritten Fall durch ein Verfahren zur Spannungsversorgung einer Anordnung gelöst, die folgende Elemente aufweist:
- eine externe Spannungsquelle ist mit einem ersten Eingang einer Steuerschaltung verbunden,
- die externe Spannungsquelle ist mit einem ersten Schalter verbunden,
- der erste Schalter ist mit einem Betriebsspannungsversorgungseingang eines Moduls verbunden,
- ein als Batterie oder Standardakkumulator ausgebildeter interner elektrischer Energiespeicher ist mit einem zweiten Eingang der Steuerschaltung verbunden,
- der interne elektrische Energiespeicher ist mit dem ersten Schalter und dem Betriebsspannungsversorgungseingang verbunden,
- ein erster Ausgang der Steuerschaltung ist mit dem ersten Schalter verbunden,
   wobei bei dem Verfahren
- die Steuerschaltung erkennt, ob die an dem ersten Eingang anliegende Spannung oberhalb oder unterhalb eines Schwellwertes liegt, - die Steuerschaltung erkennt, dass ein interner elektrischer Energiespeicher mit dem zweiten Eingang der Steuerschaltung verbunden ist,
- die Steuerschaltung erkennt, dass kein Akkumulatortypelement mit dem dritten Eingang der Steuerschaltung verbunden ist,
   und wobei in diesem Fall,
- die Steuerschaltung den ersten Schalter ausschaltet, unabhängig davon, ob die am ersten Eingang der Steuerschaltung anliegende Spannung unterhalb oder oberhalb des Schwellwertes liegt, so dass das Modul nicht mit Betriebsspannung aus der externen Spannungsquelle versorgt wird.

Dadurch kann die Spannungsversorgung des Moduls mit einem Schaltnetzteil und einem Standardakkumulator oder einer Batterie als internem elektrischem Energiespeicher an Stelle eines Lithiumakkumulators erfolgen.

Die Aufgabe wird erfindungsgemäß in einem vierten Fall durch ein Verfahren zur Spannungsversorgung einer Anordnung gelöst, die folgende Elemente aufweist:
- eine externe Spannungsquelle ist mit einem ersten Eingang einer Steuerschaltung verbunden,
- die externe Spannungsquelle ist mit einem ersten Schalter verbunden,
- der erste Schalter ist mit einem Betriebsspannungsversorgungseingang eines Moduls verbunden, - ein erster Ausgang der Steuerschaltung ist mit dem ersten Schalter verbunden,
   wobei bei dem Verfahren
- die Steuerschaltung erkennt, ob die an dem ersten Eingang anliegende Spannung oberhalb oder unterhalb eines Schwellwertes liegt,
- die Steuerschaltung erkennt, dass kein interner elektrischer Energiespeicher mit dem zweiten Eingang der Steuerschaltung verbunden ist,
- die Steuerschaltung erkennt, dass kein Akkumulatortypelement mit dem dritten Eingang der Steuerschaltung verbunden ist,
   und wobei in diesem Fall
- die Steuerschaltung den ersten Schalter einschaltet, wenn die am ersten Eingang der Steuerschaltung anliegen- de Spannung unterhalb des Schwellwertes liegt, so dass das Modul mit Betriebsspannung aus der externen Spannungsquelle versorgt wird, und
- den ersten Schalter ausschaltet, wenn die am ersten Eingang der Steuerschaltung anliegende Spannung oberhalb des Schwellwertes liegt, so dass das Modul nicht mit Betriebsspannung aus der externen Spannungsquelle versorgt wird.

Dadurch kann die Spannungsversorgung des Moduls mit einem Schaltnetzteil aber ohne internem elektrischem Energiespeicher erfolgen.

Die erfindungsgemäße Steuerschaltung der ersten Variante hat einen ersten Eingang, einen zweiten Eingang, einen dritten Eingang, einen ersten Ausgang und einen zweiten Ausgang zur Ausführung des Verfahrens zur Spannungsversorgung einer Anordnung mit vorstehend benannten Elementen , wenn eine Ladeschaltung in der Anordnung vorhanden ist.

Die erfindungsgemäße Steuerschaltung der zweiten Variante hat einen ersten Eingang, einen zweiten Eingang, einen dritten Eingang und einen ersten Ausgang zur Ausführung des Verfahrens zur Spannungsversorgung einer Anordnung mit vorstehend benannten Elementent, wenn keine Ladeschaltung in der Anordnung vorhanden ist.

Weiterbildungen der Erfindung ergeben sich aus den Unteransprüchen.

In vorteilhafter Weise ist hinsichtlich des Verfahrens nach dem ersten Fall das Akkumulatortypelement als Temperatur' widerstand ausgebildet. Dadurch lassen sich gängige Lithiumakkumulatoren durch die Steuerschaltung erkennen.

In weiterhin vorteilhafter Weise hinsichtlich des ersten Falls steuert eine Erhaltungsladungsschaltung, die mit der externen Spannungsquelle, dem zweiten Ausgang der Steuer- Schaltung, dem Lithiumakkumulator und dem Modul verbunden ist, bei vollständig entladenem Lithiumakkumulator, das Laden des Lithiumakkumulators. Dadurch lässt sich diese Variante auch für Spannungsversorgungskonzepte anwenden, bei denen digitale Ladeverfahren (Pulsladeverfahren) zum Einsatz kommen.

In einer weiterhin vorteilhaften Weiterbildung der Erfindung gemäß dem zweiten Fall weist die Anordnung zusätzlich folgende Elemente auf:
- die externe Spannungsquelle ist mit einer Ladeschaltung verbunden,
- die Ladeschaltung ist mit dem internen elektrischen Energiespeicher verbunden, - ein zweiter Ausgang der Steuerschaltung ist mit der Ladeschaltung verbunden,
   wobei in diesem Fall,
- die Steuerschaltung die Ladeschaltung sperrt, unabhängig davon, ob die am ersten Eingang der Steuerschaltung an- liegende Spannung unterhalb oder oberhalb des Schwell wertes liegt, so dass das Modul nicht mittels der Ladeschaltung mit Betriebsspannung aus der externen Spannungsquelle versorgt wird.

Dadurch kann die Spannungsversorgung des Moduls mit einem Schaltnetzteil und einem Kondensator als internem elektrischem Energiespeicher an Stelle eines Akkumulators oder einer Batterie erfolgen, auch wenn zusätzlich eine Ladeschaltung in der Anordnung vorhanden ist.

In einer weiteren vorteilhaften Weiterbildung der Erfindung gemäß des dritten Falls weist die Anordnung zusätzlich folgende Elemente auf:
- die externe Spannungsquelle ist mit einer Ladeschaltung verbunden,
- die Ladeschaltung ist mit dem internen elektrischen Energiespeicher verbunden,
- ein zweiter Ausgang der Steuerschaltung ist mit der Ladeschaltung verbunden, wobei in diesem Fall,
- die Steuerschaltung die Ladeschaltung sperrt, unabhängig davon, ob die am ersten Eingang der Steuerschaltung anliegende Spannung unterhalb oder oberhalb des Schwellwertes liegt, so dass das Modul nicht mit Betriebsspannung aus der externen Spannungsquelle versorgt wird.

Dadurch kann die Spannungsversorgung des Moduls mit einem Schaltnetzteil und einem Standardakkumulator oder einer Batterie als internem elektrischem Energiespeicher an Stelle eines Lithiumakkumulators erfolgen, auch wenn zusätzlich eine Ladeschaltung in der Anordnung vorhanden ist.

In einer weiteren vorteilhaften Weiterbildung der Erfindung gemäß des vierten Falls weist die Anordnung zusätzlich folgende Elemente auf:
- die externe Spannungsquelle ist mit einer Ladeschaltung verbunden, - die Ladeschaltung ist mit dem Betriebsversorgungseingang des Moduls verbunden,
- ein zweiter Ausgang der Steuerschaltung ist mit der Ladeschaltung verbunden, wobei in diesem Fall - die Steuerschaltung die Ladeschaltung sperrt, unabhängig davon, ob die am ersten Eingang der Steuerschaltung anliegende Spannung unterhalb oder oberhalb des Schwellwertes liegt, so dass das Modul nicht mittels der Ladeschaltung mit Betriebsspannung aus der externen Spannungsquelle versorgt wird.

Dadurch kann die Spannungsversorgung des Moduls mit einem Schaltnetzteil aber ohne internem elektrischem Energiespeicher erfolgen, auch wenn zusätzlich eine Ladeschaltung in der Anordnung vorhanden ist.

Weitere Vorteile der Erfindung ergeben sich aus der folgenden Beschreibung, welche in Verbindung mit der beigefügten Zeichnung die Erfindung an Hand von einem Ausführungsbeispiel erläutert.

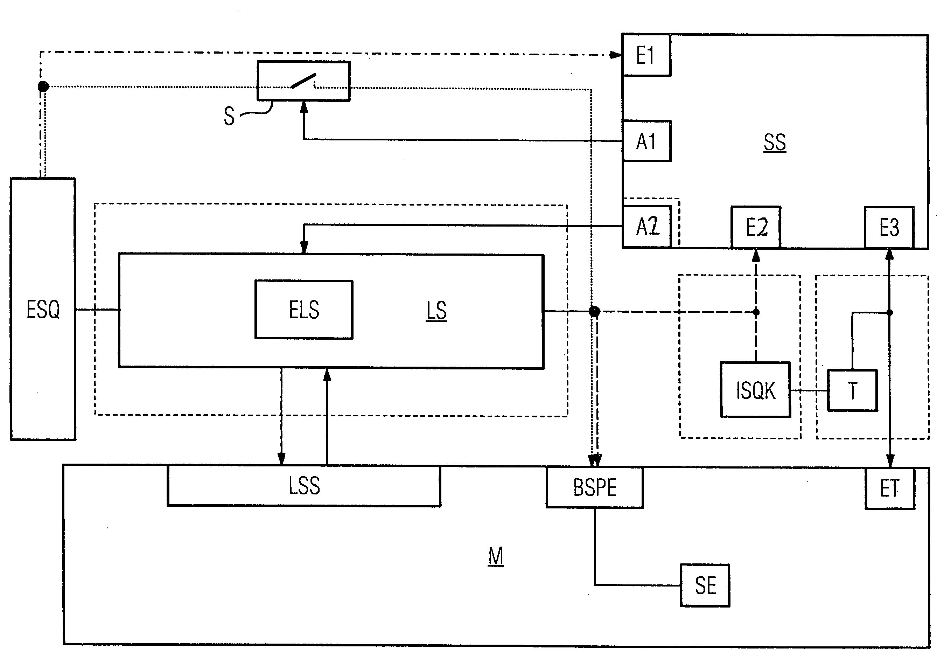

Dabei zeigt in schematischer Darstellung die
- FIG 1: ein Blockschaltbild einer Anordnung, bei der das erfindungsgemäße Verfahren zur Spannungsversorgung durchführbar ist.

Die Figur 1 zeigt ein Blockschaltbild einer Anordnung, bei der das erfindungsgemäße Verfahren zur Spannungsversorgung durchführbar ist. Die Anordnung umfasst eine externe Spannungsquelle ESQ, einen Schalter S, eine Steuerschaltung SS, umfassend einen ersten Eingang E1, einen zweiten Eingang E2, einen dritten Eingang E3, einen ersten Ausgang A1 und einen zweiten Ausgang A2, sowie ein Modul M, umfassend eine Ladeschaltungssteuerungseinheit LSS, einen Betriebsspannungsversorgungseingang BSPE, ein mit dem Betriebsspannungsversorgungseingang BSPE verbundenen Sendeempfänger SE, und einen Akkumulatortypeingang ET.

Die Anordnung kann des Weiteren eine Ladeschaltung LS mit einer Erhaltungsladungsschaltung ELS und/oder einen internen elektrischen Energiespeicher ISQK und/oder ein Akkumulatortypelement T umfassen. Diese weiteren Komponenten sowie der zweite Ausgang A2 der Steuerschaltung SS sind zum Zeichen, dass sie nicht in allen Varianten des erfindungsgemäßen Verfahren zur Spannungsversorgung der Anordnung enthalten sein müssen, mit einer dünnen gestrichelten Umrandung versehen.

Die Betriebsspannungsversorgungsleitung zwischen externer Spannungsquelle ESQ und Modul M ist in allen weiteren Varianten des erfindungsgemäßen Verfahrens zur Spannungsversorgung des Moduls M durch die gepunktete Linie dargestellt. Die Betriebsspannungsversorgungsleitung zwischen interner elektrischer Spannungsquelle ISQK und Modul M ist in allen weiteren Varianten des erfindungsgemäßen Verfahrens zur Spannungsversorgung des Moduls M durch die gestrichelte Linie dargestellt. Die Verbindungsleitung zwischen externer Spannungsquelle ESQ und dem ersten Eingang E1 der Steuerschaltung SS ist in allen weiteren Varianten des erfindungsgemäßen Verfahrens zur Spannungsversorgung des Moduls M durch die gestrichelt gepunktete Linie dargestellt.

Verbindungspunkte zwischen einzelnen Leitungen sind in allen weiteren Varianten des erfindungsgemäßen Verfahrens zur Spannungsversorgung des Moduls M durch die beiden schwarzen Ellipsen dargestellt.

In einer ersten Variante des erfindungsgemäßen Verfahrens zur Spannungsversorgung des Moduls M, weist die Anordnung folgende Elemente auf: Eine externe Spannungsquelle ESQ, welche als Schaltnetzteil oder als Ladegerät ausgebildet sein kann, ist über eine erste Leitung mit einem ersten Eingang E1 einer Steuerschaltung SS und über eine zweite Leitung mit dem ersten Schalter S und über eine dritte Leitung mit der Ladeschaltung LS verbunden. Der erste Schalter S ist mit dem Betriebsspannungsversorgungseingang BSPE des Moduls M verbunden. Die Ladeschaltung LS ist mit einem als Lithiumakkumulator ausgebildeten internen elektrischen Energiespeicher ISQK und mit der Ladeschaltungssteuerungseinheit LSS des Moduls M verbunden. Der Lithiumakkumulator ist mit dem zweiten Eingang E2 der Steuerschaltung SS, dem ersten Schalter S, dem Betriebsspannungsversorgungseingang BSPE und mit dem Akkumulatortypelement T verbunden. Das Akkumulatortypelement T ist mit dem dritten Eingang E3 der Steuerschaltung SS und dem Akkumulatortypeingang ET des Moduls M verbunden. Der erste Ausgang A1 der Steuerschaltung SS ist mit dem ersten Schalter S verbunden. Der zweite Ausgang A2 der Steuerschaltung SS ist mit der Ladeschaltung LS verbunden.

Bei dem Verfahren nach dieser Variante erkennt die Steuerschaltung SS, ob die an dem ersten Eingang E1 anliegende Spannung oberhalb oder unterhalb eines Schwellwertes liegt. Ist die externe Spannungsquelle ESQ als Schaltnetzteil ausgebildet, liefert sie bei handelsüblichen Schaltnetzteilen Spannungen unterhalb von 4,2 Volt. Ist die externe Spannungsquelle ESQ als Ladegerät ausgebildet, liefert sie bei handelsüblichen Ladegeräten Spannungen oberhalb von 4,5 Volt. Spannungserkennungsschaltungen, die zwischen diesen beiden Spannungspegeln unterscheiden können, sind dem Fachmann in einer Vielzahl bekannt, so dass hier auf eine explizite Darstellung einer entsprechenden Schaltung verzichtet wird. Die Erfindung soll nicht auf die genannten Spannungen beschränkt sein.

Die Steuerschaltung SS erkennt, dass ein interner elektrischer Energiespeicher ISQK mit dem zweiten Eingang E2 der Steuerschaltung SS verbunden ist. Die Steuerschaltung SS erkennt, dass ein Akkumulatortypelement T, welches bei handelsüblichen Lithiumakkumulatoren als Temperaturwiderstand ausgebildet ist, mit dem dritten Eingang E3 der Steuerschaltung SS verbunden ist. Auch hier sind dem Fachmann Schaltungen zur Erkennung von Spannungspegeln an den Eingängen E2, E3 bekannt, so dass ebenfalls auf eine explizite Darstellung verzichtet wird.

Die Steuerschaltung SS schaltet den ersten Schalter S aus und sperrt die Ladeschaltung LS, wenn die am ersten Eingang E1 anliegende Spannung unterhalb des Schwellwertes liegt, also die externe Spannungsquelle ESQ als Schaltnetzteil ausgebildet ist, so dass die Betriebsspannung des Moduls M aus dem Lithiumakkumulator und nicht aus dem Schaltnetzteil bezogen wird. Dadurch wird eine Zerstörung des Lithiumakkumulators vermieden.

Die Steuerschaltung SS schaltet den ersten Schalter S aus und aktiviert die Ladeschaltung LS, wenn die am ersten Eingang E1 anliegende Spannung oberhalb des Schwellwertes liegt, also die externe Spannungsquelle ESQ als Ladegerät ausgebildet ist, so dass der Lithiumakkumulator während des Betriebs des Moduls M durch das Ladegerät mittels der Ladeschaltung LS geladen wird. Dadurch wird je nach verwendetem Lithiumakkumulator sowohl bei analogen Ladeverfahren als auch bei Pulsladeverfahren (digitale Ladeverfahren) auf einen zulässigen Maximalwert z.B. 0,5 Ampere oder 1 Ampere beschränkt. Da Ladeschaltungen dem Fachmann ausgiebig bekannt sind, wird hier auf eine explizite Darstellung verzichtet.

Ist der Lithiumakkumulator bereits vollständig entladen, wird der Ladevorgang beim Pulsladeverfahren durch die Erhaltungsladeschaltung (Trickle Charge) ELS, die mit der externen Spannungsquelle ESQ, dem zweiten Ausgang A2 der Steuerschaltung SS, dem Lithiumakkumulator und der Ladeschaltungssteuerungseinheit LSS des Moduls M verbunden ist, gesteuert. Auch sind Erhaltungsladeschaltungen dem Fachmann ausgiebig bekannt, so dass hier auf eine explizite Darstellung verzichtet wird. Die Steuerung der Ladeströme bzw. Erhaltungsladeströme erfolgt mittels der Ladeschaltungssteuerungseinheit LSS.

In einer zweiten Variante des erfindungsgemäßen Verfahrens zur Spannungsversorgung des Moduls M, weist die Anordnung folgende Elemente auf: Die externe Spannungsquelle ESQ, die wiederum als Schaltnetzteil oder als Ladegerät ausgebildet sein kann, ist mit dem ersten Eingang E1 der Steuerschaltung SS und dem ersten Schalter S verbunden. Der erste Schalter S ist mit dem Betriebsspannungsversorgungseingang BSPE des Moduls M verbunden. Ein als Kondensator ausgebildeter interner elektrischer Energiespeicher ISQK ist mit dem zweiten Eingang E2 der Steuerschaltung SS, dem ersten Schalter S und dem Betriebsspannungsversorgungseingang BSPE verbunden. Der erste Ausgang A1 der Steuerschaltung SS ist mit dem ersten Schalter S verbunden.

Die Steuerschaltung SS erkennt, ob die an dem ersten Eingang E1 anliegende Spannung oberhalb oder unterhalb eines Schwellwertes liegt, dass ein interner elektrischer Energiespeicher ISQK mit dem zweiten Eingang E2 der Steuerschaltung SS verbunden ist und dass kein Akkumulatortypelement T mit dem dritten Eingang E3 der Steuerschaltung SS verbunden ist.

Die Steuerschaltung SS schaltet den ersten Schalter S ein, wenn die am ersten Eingang E1 anliegende Spannung unterhalb des Schwellwertes liegt, so dass die Betriebsspannungsversorgung des Moduls M durch das Schaltnetzteil erfolgt. Jetzt kann ein kostengünstiges Standardschaltnetzteil verwendet werden, welches maximale Stromstärken liefert, die unterhalb der maximalen Stromaufnahme durch das Modul M im Sendebetrieb liegen, beispielsweise von 1 Ampere. Die Stromversorgung bei im Sendebetrieb erforderlichen Spitzenströmen erfolgt dann zusätzlich aus dem Kondensator.

Die Steuerschaltung SS schaltet den ersten Schalter S aus, wenn die am ersten Eingang E1 anliegende Spannung oberhalb des Schwellwertes liegt, so dass das Modul M nicht mit Betriebsspannung aus der externen Spannungsquelle ESQ versorgt wird.

Ist die Anordnung zusätzlich mit der Ladeschaltung LS, die mit der externen Spannungsquelle ESQ, dem internen elektrischen Energiespeicher ISQK, der Ladeschaltungssteuerungseinheit LSS und dem zweiten Ausgang A2 der Steuerschaltung SS verbunden ist, versehen, sperrt die Steuerschaltung SS die Ladeschaltung LS bzw. die Erhaltungsladungsschaltung ELS, unabhängig davon, ob die am ersten Eingang E1 der Steuerschaltung SS anliegende Spannung unterhalb oder oberhalb des Schwellwertes liegt, so dass das Modul M nicht mittels der Ladeschaltung LS bzw. der Erhaltungsladungsschaltung ELS mit Betriebsspannung aus der externen Spannungsquelle ESQ, Schaltnetzteil oder Ladegerät, versorgt wird, um eine Zerstörung des Moduls M zu verhindern.

In einer dritten Variante des erfindungsgemäßen Verfahrens zur Spannungsversorgung des Moduls M, weist die Anordnung folgende Elemente auf: Die externe Spannungsquelle ESQ, welche wiederum als Schaltnetzteil oder als Ladegerät ausgebildet sein kann, ist mit einem ersten Eingang der Steuerschaltung SS und mit dem ersten Schalter S verbunden. Der erste Schalter S ist mit dem Betriebsspannungsversorgungseingang BSPE des Moduls M verbunden. Der als Batterie oder Standardakkumulator ausgebildete interne elektrische Energiespeicher ISQK ist mit dem zweiten Eingang E2 der Steuerschaltung SS, dem ersten Schalter S und dem Betriebsspannungsversorgungseingang BSPE verbunden. Der erste Ausgang A1 der Steuerschaltung SS ist mit dem ersten Schalter S verbunden.

Die Steuerschaltung SS erkennt, ob die an dem ersten Eingang E1 anliegende Spannung oberhalb oder unterhalb eines Schwellwertes liegt, dass ein interner elektrischer Energiespeicher ISQK mit dem zweiten Eingang E2 der Steuerschaltung SS verbunden ist und dass kein Akkumulatortypelement T mit dem dritten Eingang E3 der Steuerschaltung SS verbunden ist.

Die Steuerschaltung SS schaltet den ersten Schalter S aus, unabhängig davon, ob die am ersten Eingang E1 der Steuerschaltung SS anliegende Spannung unterhalb oder oberhalb des Schwellwertes liegt, so dass das Modul M nicht mit Betriebsspannung aus der externen Spannungsquelle ESQ versorgt wird. Eine Zerstörung der internen elektrischen Spannungsquelle ISQK, Batterie oder Standardakkumulator, wird so vermieden. Die erforderliche Betriebsspannung erhält das Modul M durch die interne elektrische Spannungsquelle ISQK.

Ist die Anordnung zusätzlich mit der Ladeschaltung LS, die mit der externen Spannungsquelle ESQ, dem internen elektrischen Energiespeicher ISQK, der Ladeschaltungssteuerungseinheit LSS und dem zweiten Ausgang A2 der Steuerschaltung SS verbunden ist, versehen, sperrt die Steuerschaltung SS die Ladeschaltung LS, unabhängig davon, ob die am ersten Eingang E1 der Steuerschaltung SS anliegende Spannung unterhalb oder oberhalb des Schwellwertes liegt, so dass das Modul M nicht mittels der Ladeschaltung LS bzw. der Erhaltungsladungsschaltung ELS mit Betriebsspannung aus der externen Spannungsquelle ESQ, Schaltnetzteil oder Ladegerät, versorgt wird. Dadurch wird auch eine Zerstörung des internen elektrischen Energiespeicher ISQK verhindert.

In einer vierten Variante des erfindungsgemäßen Verfahrens zur Spannungsversorgung des Moduls M, weist die Anordnung folgende Elemente auf: Die externe Spannungsquelle ESQ, die wiederum als Schaltnetzteil oder Ladegerät ausgebildet sein kann, ist mit dem ersten Eingang E1 der Steuerschaltung SS und dem ersten Schalter S verbunden. Der erste Schalter S ist mit dem Betriebsspannungsversorgungseingang BSPE des Moduls M und dem ersten Ausgang A1 der Steuerschaltung SS verbunden. Die Steuerschaltung SS erkennt, ob die an dem ersten Eingang E1 anliegende Spannung oberhalb oder unterhalb eines Schwellwertes liegt, dass kein interner elektrischer Energiespeicher ISQK mit dem zweiten Eingang E2 der Steuerschaltung SS verbunden ist und dass kein Akkumulatortypelement T mit dem dritten Eingang E3 der Steuerschaltung SS verbunden ist.

Die Steuerschaltung SS schaltet den ersten Schalter S ein, wenn die am ersten Eingang E1 der Steuerschaltung SS anliegende Spannung unterhalb des Schwellwertes liegt, so dass das Modul M mit Betriebsspannung aus der als Schaltnetzteil ausgebildeten externen Spannungsquelle ESQ versorgt wird. In diesem Fall muss das Schaltnetzteil jedoch die erforderlichen hohen Spitzenströme z. B. 3,2 Ampere, die im Sendebetrieb eines Funkmoduls benötigt werden, allein bereitstellen können.

Die Steuerschaltung SS schaltet den ersten Schalter S aus, wenn die am ersten Eingang E1 der Steuerschaltung SS anliegende Spannung oberhalb des Schwellwertes liegt, so dass das Modul M nicht mit Betriebsspannung aus der als Ladegerät ausgebildeten externen Spannungsquelle ESQ versorgt wird, um eine Zerstörung des Moduls M zu vermeiden.

Ist die Anordnung zusätzlich mit der Ladeschaltung LS, die mit der externen Spannungsquelle ESQ, dem internen elektrischen Energiespeicher ISQK, der Ladeschaltungssteuerungseinheit LSS und dem zweiten Ausgang A2 der Steuerschaltung SS verbunden ist, versehen, sperrt die Steuerschaltung SS die Ladeschaltung LS, unabhängig davon, ob die am ersten Eingang E1 der Steuerschaltung SS anliegende Spannung unterhalb oder oberhalb des Schwellwertes liegt, so dass das Modul M nicht mittels der Ladeschaltung LS bzw. der Erhaltungsladungsschaltung ELS mit Betriebsspannung aus der externen Spannungsquelle ESQ, Schaltnetzteil oder Ladegerät, versorgt wird. Dadurch wird auch eine Zerstörung des Moduls M verhindert.

In dieser Variante mit oder ohne Ladeschaltung LS kann die Spannungsversorgung des Moduls M mit einem Schaltnetzteil aber ohne internem elektrischem Energiespeicher ISQK erfolgen.

Durch die Einführung der beschriebenen Steuerschaltung SS lassen sich also eine Vielzahl verschiedener Spannungsversorgungskonzepte für ein Modul M, beispielsweise durch einen Anwender, der eine Anordnung, umfassend ein Modul M, eine Steuerschaltung SS, einen ersten Schalter S und gegebenenfalls eine Ladeschaltung LS, erwirbt, unmittelbar anpassen. Der Anwender kann somit auf Anforderungen seiner Kunden hinsichtlich Zuverlässigkeit und Kosten einer entsprechenden Anordnung flexibel reagieren und die kundenseitig geforderten Spannungsquellen mitliefern.

Die Erfindung ist nicht auf die beschriebenen Varianten des speziellen Ausführungsbeispiels beschränkt, sondern schließt weitere nicht explizit offenbarte Abwandlungen mit ein, solange von dem Kern der Erfindung Gebrauch gemacht wird. Dies gilt insbesondere für die Ausgestaltung der elektronischen Schaltungen, die im Rahmen des fachmännischen Könnens liegen. Ebenso können einzelne hier separat dargestellte Elemente in anderen Elementen inkorporiert sein.

Das erfindungsgemäße Verfahren und die erfindungsgemäße Steuerschaltung SS ist vornehmlich für Funkmodule vorgesehen, die nach dem Zeitlagegetrenntverfahren (Time Division Multiple Access) arbeiten, z. B. GSM, GPRS, EDGE, UMTS, BLUETOOTH, WLAN etc.. Sie ist allerdings auch anwendbar für Module M, die in spannungsnetzunabhängigen portablen Endgeräten, wie beispielsweise Taschenrechner, Notebooks, Walkman, Radios etc., einsetzbar sind, und die einerseits mittels Batterien, Standardakkumulatoren, Lithiumakkumulatoren und andererseits auch mittels Schaltnetzteilen oder Ladegeräten betrieben werden können.

## Patentansprüche

1. Steuerschaltung (SS) zur Anpassung einer Spannungsversorgungsanordnung mit einem ersten Eingang (E1), einem zweiten Eingang (E2), einem dritten Eingang (E3), einem ersten Ausgang (A1) und einem zweiten Ausgang (A2), wobei
- eine externe Spannungsquelle (ESQ) mit dem ersten Eingang (E1) der Steuerschaltung (SS) verbindbar ist, und
- ein interner elektrischer Energiespeicher (ISQK) mit dem zweiten Eingang (E2) der Steuerschaltung (SS) verbindbar ist, und
- ein Akkumulatypelement (T) mit dem dritten Eingang (E3) der Steuerschaltung (SS) verbindbar ist und geeignet ist, diesen ein- oder auszuschalten, und
- der erste Ausgang (A1) der Steuerschaltung (SS) mit einem ersten Schalter (S) verbindbar ist, und
- der zweite Ausgang (A2) der Steuerschaltung (SS) mit einer Ladeschaltung (LS) verbindbar ist, und wobei
• in einem ersten Fall einer Spannungsversorgungsanordnung:
- die externe Spannungsquelle (ESQ) mit dem ersten Eingang (E1) der Steuerschaltung (SS) verbunden ist,
• die externe Spannungsquelle (ESQ) mit einem ersten Anschluss des ersten Schalter (S) verbunden ist,
- die externe Spannungsquelle (ESQ) mit der Ladeschaltung (LS) verbunden ist,
• der erste Schalter (S) an einem zweiten Anschluss mit einem Betriebsspannungsversorgungseingang (BSPE) eines Moduls (M) verbunden ist,
- die Ladeschaltung (LS) mit einem als Lithiumakkumulator ausgebildeten internen elektrischen Energiespeicher (ISQK) verbunden ist,
- der interne elektrische Energiespeicher (ISQK) mit dem zweiten Eingang (E2) der Steuerschaltung (SS) verbunden ist,
• der interne elektrische Energiespeicher (ISQK) mit dem zweiten Anschluss des ersten Schalters (S) und dem Betriebsspannungsversorgungseingang (BSPE) verbunden ist,
- der interne elektrische Energiespeicher (ISQK) mit dem Akkumulatortypelement (T) verbunden ist,
- das Akkumulatortypelement (T) mit einem dritten Eingang (E3) der Steuerschaltung (SS) verbunden ist,
• der erste Ausgang (A1) der Steuerschaltung (SS) mit dem ersten Schalter (S) verbunden ist,
- der zweite Ausgang (A2) der Steuerschaltung (SS) mit der Ladeschaltung (LS) verbunden ist, und wobei
- in dem ersten Fall die Steuerschaltung (SS) ausgebildet ist,
- zu erkennen, ob die an dem ersten Eingang (E1) anliegende Spannung oberhalb oder unterhalb eines Schwellwertes liegt, und
- zu erkennen, dass der interne elektrische Energiespeicher (ISQK) mit dem zweiten Eingang (E2) der Steuerschaltung (SS) verbunden ist, und
- zu erkennen, dass das Akkumulatortypelement (T) mit dem dritten Eingang (E3) der Steuerschaltung (SS) verbunden ist, und wobei
- in dem ersten Fall,
- die Steuerschaltung (SS) den ersten Schalter (S) ausschaltet und die Ladeschaltung (LS) sperrt, wenn die am ersten Eingang (E1) anliegende Spannung unterhalb des Schwellwertes liegt, so dass die Betriebsspannung des Moduls (M) aus dem Lithiumakkumulator und nicht aus der externen Spannungsquelle (ESQ) bezogen wird und
- die Steuerschaltung (SS) den ersten Schalter (S) aus- schaltet und die Ladeschaltung (LS) aktiviert, wenn die am ersten Eingang (E1) anliegende Spannung oberhalb des Schwellwertes liegt, so dass der Lithiumakkumulator während des Betriebs des Moduls (M) durch die externe Spannungsquelle (ESQ) mittels der Ladeschaltung (LS) geladen wird;
• in einem zweiten Fall einer Spannungsversorgunganordnung:
- die externe Spannungsquelle (ESQ) mit dem ersten Eingang (E1) der Steuerschaltung (SS) verbunden ist,
- die externe Spannungsquelle (ESQ) mit einem ersten Anschluss des ersten Schalters (S) verbunden ist,
- der erste Schalter (S) an einem zweiten Anschluss mit einem Betriebsspannungsversorgungseingang (BSPE) eines Moduls (M) verbunden ist,
- ein als Kondensator ausgebildeter interner elektrischer Energiespeicher (ISQK) mit dem zweiten Eingang (E2) der Steuerschaltung (SS) verbunden ist,
- der interne elektrische Energiespeicher (ISQK) mit dem zweiten Anschluss des ersten Schalters (S) und dem Betriebsspannungsversorgungseingang (BSPE) verbunden ist,
- der erste Ausgang (A1) der Steuerschaltung (SS) mit dem ersten Schalter (S) verbunden ist, und wobei
- in dem zweiten Fall die Steuerschaltung (SS) ausgebildet ist,
- zu erkennen, ob die an dem ersten Eingang (E1) anliegende Spannung oberhalb oder unterhalb eines Schwellwertes liegt, und
- zu erkennen, dass der interne elektrische Energiespeicher (ISQK) mit dem zweiten Eingang (E2) der Steuerschaltung (SS) verbunden ist, und
- zu erkennen, dass kein Akkumulatortypelement (T) mit dem dritten Eingang (E3) der Steuerschaltung (SS) verbunden ist, und wobei
- in dem zweiten Fall,
- die Steuerschaltung (SS) den ersten Schalter (S) einschaltet, wenn die am ersten Eingang (E1) anliegende Spannung unterhalb des Schwellwertes liegt und
- den ersten Schalter (S) ausschaltet, wenn die am ersten Eingang (E1) anliegende Spannung oberhalb des Schwellwertes liegt, so dass im letzteren Unterfall das Modul
(M) nicht mit Betriebsspannung aus der externen Spannungsquelle (ESQ) versorgt wird;
• in einem dritten Fall einer Spannungsversorgungsanordnung:
- die externe Spannungsquelle (ESQ) mit dem ersten Eingang (E1) der Steuerschaltung (SS) verbunden ist,
- die externe Spannungsquelle (ESQ) mit einem ersten Anschluss des ersten Schalters (S) verbunden ist,
- der erste Schalter (S) an einem zweiten Anschluss mit einem Betriebsspannungsversorgungseingang (BSPE) eines Moduls (M) verbunden ist,
- ein als Batterie oder Standardakkumulator ausgebildeter interner elektrischer Energiespeicher (ISQK) mit dem zweiten Eingang (E2) der Steuerschaltung (SS) verbunden ist,
- der interne elektrische Energiespeicher (ISQK) mit dem zweiten Anschluss des ersten Schalters (S) und dem Betriebsspannungsversorgungseingang (BSPE) verbunden ist,
- der erste Ausgang (A1) der Steuerschaltung (SS) mit dem ersten Schalter (S) verbunden ist, und wobei
- in dem dritten Fall die Steuerschaltung (SS) ausgebildet ist,
- zu erkennen, ob die an dem ersten Eingang (E1) anliegende Spannung oberhalb oder unterhalb eines Schwellwertes liegt, und
- zu erkennen, dass ein interner elektrischer Energiespeicher (ISQK) mit dem zweiten Eingang (E2) der Steuerschaltung (SS) verbunden ist, und
- zu erkennen, dass kein Akkumulatortypelement (T) mit dem dritten Eingang (E3) der Steuerschaltung (SS) verbunden ist, und wobei
- in dem dritten Fall,
- die Steuerschaltung (SS) den ersten Schalter (S) ausschaltet, unabhängig davon, ob die am ersten Eingang (E1) der Steuerschaltung (SS) anliegende Spannung unter- halb oder oberhalb des Schwellwertes liegt, so dass das Modul (M) nicht mit Betriebsspannung aus der externen Spannungsquelle (ESQ) versorgt wird;
• in einem vierten Fall einer Spannungsversorgungsanordnung:
- die externe Spannungsquelle (ESQ) mit dem ersten Eingang (E1) der Steuerschaltung (SS) verbunden ist,
- die externe Spannungsquelle (ESQ) mit einem ersten Anschluss des ersten Schalters (S) verbunden ist,
- der erste Schalter (S) an einem zweiten Anschluss mit einem Betriebsspannungsversorgungseingang (BSPE) eines Moduls (M) verbunden ist,
- der erste Ausgang (A1) der Steuerschaltung (SS) mit dem ersten Schalter (S) verbunden ist, und wobei
- in dem vierten Fall die Steuerschaltung (SS) ausgebildet ist,
- zu erkennen, ob die an dem ersten Eingang (E1) anliegende Spannung oberhalb oder unterhalb eines Schwellwertes liegt, und
- zu erkennen, dass kein interner elektrischer Energiespeicher (ISQK) mit dem zweiten Eingang (E2) der Steuerschaltung (SS) verbunden ist, und
- zu erkennen, dass kein Akkumulatortypelement (T) mit dem dritten Eingang (E3) der Steuer- Schaltung (SS) verbunden ist, und wobei
in dem vierten Fall
- die Steuerschaltung (SS) den ersten Schalter (S) einschaltet, wenn die am ersten Eingang (E1) der Steuerschaltung (SS) anliegende Spannung unterhalb des Schwellwertes liegt, so dass das Modul (M) mit Betriebsspannung aus der externen Spannungsquelle (ESQ) versorgt wird, und
- den ersten Schalter (S) ausschaltet, wenn die am ersten Eingang (E1) der Steuerschaltung (SS) anliegende Spannung oberhalb des Schwellwertes liegt, so dass das Modul (M) nicht mit Betriebsspannung aus der externen Spannungsquelle (ESQ) versorgt wird.

2. Steuerschaltung (SS) zur Anpassung einer Spannungsversorgungsanordnung mit einem ersten Eingang (E1), einem zweiten Eingang (E2), einem dritten Eingang (E3) und einem ersten Ausgang (A1), wobei
- eine externe Spannungsquelle (ESQ) mit dem ersten Eingang (E1) der Steuerschaltung (SS) verbindbar ist, und
- ein interner elektrischer Energiespeicher (ISQK) mit dem zweiten Eingang (E2) der Steuerschaltung (SS) verbindbar ist, und
- ein Akkumulatypelement (T) mit dem dritten Eingang (E3) der Steuerschaltung (SS) verbindbar ist und geeignet ist, diesen ein- oder auszuschalten, und
- der erste Ausgang (A1) der Steuerschaltung (SS) mit einem ersten Schalter (S) verbindbar ist und geeignet ist, diesen ein- oder auszuschalten, und wobei
• in einem zweiten Fall einer Spannungsversorgunganordnung:
- die externe Spannungsquelle (ESQ) mit dem ersten Eingang (E1) der Steuerschaltung (SS) verbunden ist,
- die externe Spannungsquelle (ESQ) mit einem ersten Anschluss des ersten Schalters (S) verbunden ist,
- der erste Schalter (S) an einem zweiten Anschluss mit einem Betriebsspannungsversorgungseingang (BSPE) eines Moduls (M) verbunden ist,
- ein als Kondensator ausgebildeter interner elektrischer Energiespeicher (ISQK) mit dem zweiten Eingang (E2) der Steuerschaltung (SS) verbunden ist,
- der interne elektrische Energiespeicher (ISQK) mit dem zweiten Anschluss des ersten Schalters (S) und dem Betriebsspannungsversorgungseingang (BSPE) verbunden ist,
- der erste Ausgang (A1) der Steuerschaltung (SS) mit dem ersten Schalter (S) verbunden ist, und wobei
- in dem zweiten Fall die Steuerschaltung (SS) ausgebildet ist,
- zu erkennen, ob die an dem ersten Eingang (E1) anliegende Spannung oberhalb oder unterhalb eines Schwellwertes liegt, und
- zu erkennen, dass der interne elektrische Energiespeicher (ISQK) mit dem zweiten Eingang (E2) der Steuerschaltung (SS) verbunden ist, und
- zu erkennen, dass kein Akkumulatortypelement (T) mit dem dritten Eingang (E3) der Steuerschaltung (SS) verbunden ist, und wobei
- in dem zweiten Fall,
- die Steuerschaltung (SS) den ersten Schalter (S) einschaltet, wenn die am ersten Eingang (E1) anliegende Spannung unterhalb des Schwellwertes liegt und
- den ersten Schalter (S) ausschaltet, wenn die am ersten Eingang (E1) anliegende Spannung oberhalb des Schwellwertes liegt, so dass im letzteren Unterfall das Modul
(M) nicht mit Betriebsspannung aus der externen Spannungsquelle (ESQ) versorgt wird;
• in einem dritten Fall einer Spannungsversorgungsanordnung:
- die externe Spannungsquelle (ESQ) mit dem ersten Eingang (E1) der Steuerschaltung (SS) verbunden ist,
- die externe Spannungsquelle (ESQ) mit einem ersten Anschluss des ersten Schalters (S) verbunden ist,
- der erste Schalter (S) an einem zweiten Anschluss mit einem Betriebsspannungsversorgungseingang (BSPE) eines Moduls (M) verbunden ist,
- ein als Batterie oder Standardakkumulator ausgebildeter interner elektrischer Energiespeicher (ISQK) mit dem zweiten Eingang (E2) der Steuerschaltung (SS) verbunden ist,
- der interne elektrische Energiespeicher (ISQK) mit dem zweiten Anschluss des ersten Schalters (S) und dem Betriebsspannungsversorgungseingang (BSPE) verbunden ist,
- der erste Ausgang (A1) der Steuerschaltung (SS) mit dem ersten Schalter (S) verbunden ist, und wobei
- in dem dritten Fall die Steuerschaltung (SS) ausgebildet ist,
- zu erkennen, ob die an dem ersten Eingang (E1) anliegende Spannung oberhalb oder unterhalb eines Schwellwertes liegt, und
- zu erkennen, dass ein interner elektrischer Energiespeicher (ISQK) mit dem zweiten Eingang (E2) der Steuerschaltung (SS) verbunden ist, und
- zu erkennen, dass kein Akkumulatortypelement (T) mit dem dritten Eingang (E3) der Steuerschaltung (SS) verbunden ist, und wobei
- in dem dritten Fall,
- die Steuerschaltung (SS) den ersten Schalter (S) ausschaltet, unabhängig davon, ob die am ersten Eingang (E1) der Steuerschaltung (SS) anliegende Spannung unter- halb oder oberhalb des Schwellwertes liegt, so dass das Modul (M) nicht mit Betriebsspannung aus der externen Spannungsquelle (ESQ) versorgt wird;
• in einem vierten Fall einer Spannungsversorgungsanordnung:
- die externe Spannungsquelle (ESQ) mit dem ersten Eingang (E1) der Steuerschaltung (SS) verbunden ist,
- die externe Spannungsquelle (ESQ) mit einem ersten Anschluss des ersten Schalters (S) verbunden ist,
- der erste Schalter (S) an einem zweiten Anschluss mit einem Betriebsspannungsversorgungseingang (BSPE) eines Moduls (M) verbunden ist,
- der erste Ausgang (A1) der Steuerschaltung (SS) mit dem ersten Schalter (S) verbunden ist, und wobei
- in dem vierten Fall die Steuerschaltung (SS) ausgebildet ist,
- zu erkennen, ob die an dem ersten Eingang (E1) anliegende Spannung oberhalb oder unterhalb eines Schwellwertes liegt, und
- zu erkennen, dass kein interner elektrischer Energiespeicher (ISQK) mit dem zweiten Eingang (E2) der Steuerschaltung (SS) verbunden ist, und
- zu erkennen, dass kein Akkumulatortypelement (T) mit dem dritten Eingang (E3) der Steuer- Schaltung (SS) verbunden ist, und wobei
in dem vierten Fall
- die Steuerschaltung (SS) den ersten Schalter (S) einschaltet, wenn die am ersten Eingang (E1) der Steuerschaltung (SS) anliegende Spannung unterhalb des Schwellwertes liegt, so dass das Modul (M) mit Betriebsspannung aus der externen Spannungsquelle (ESQ) versorgt wird, und
- den ersten Schalter (S) ausschaltet, wenn die am ersten Eingang (E1) der Steuerschaltung (SS) anliegende Spannung oberhalb des Schwellwertes liegt, so dass das Modul (M) nicht mit Betriebsspannung aus der externen Spannungsquelle (ESQ) versorgt wird.

3. Steuerschaltung (SS) nach Anspruch 1 oder 2, wobei in dem zweiten Fall einer Spannungsversorgungsanordnung:
- die externe Spannungsquelle (ESQ) mit einer Ladeschaltung (LS) verbunden ist,
- die Ladeschaltung (LS) mit dem internen elektrischen Energiespeicher (ISQK) verbunden ist,
- der zweite Ausgang (A2) der Steuerschaltung (SS) mit der Ladeschaltung (LS) verbunden ist, und wobei
- in dem zweiten Fall,
- die Steuerschaltung (SS) die Ladeschaltung (LS) sperrt, unabhängig davon, ob die am ersten Eingang (E1) der Steuerschaltung (SS) anliegende Spannung unterhalb oder oberhalb des Schwellwertes liegt, so dass das Modul (M) nicht mittels der Ladeschaltung (LS) mit Betriebsspannung aus der externen Spannungsquelle (ESQ) versorgt wird.

4. Steuerschaltung (SS) nach Anspruch 1 oder 2, wobei in dem dritten Fall einer Spannungsversorgungsanordnung:
- die externe Spannungsquelle (ESQ) mit einer Ladeschaltung (LS) verbunden ist,
- die Ladeschaltung (LS) mit dem internen elektrischen Energiespeicher (ISQK) verbunden ist,
- der zweite Ausgang (A2) der Steuerschaltung (SS) mit der Ladeschaltung (LS) verbunden ist, und wobei
- in dem dritten Fall,
- die Steuerschaltung (SS) die Ladeschaltung (LS) sperrt, unabhängig davon, ob die am ersten Eingang (E1) der Steuerschaltung (SS) anliegende Spannung unterhalb oder oberhalb des Schwellwertes liegt, so dass das Modul (M) nicht mit Betriebsspannung aus der externen Spannungsquelle (ESQ) versorgt wird.

5. Steuerschaltung (SS) nach Anspruch 1 oder 2, wobei in dem vierten Fall einer Spannungsversorgungsanordnung:
- die externe Spannungsquelle (ESQ) mit einer Ladeschaltung (LS) verbunden ist,
- die Ladeschaltung (LS) mit dem Betriebsspannungsversorgungseingang (BSPE) des Moduls (M) verbunden ist,
- der zweite Ausgang (A2) der Steuerschaltung (SS) mit der Ladeschaltung (LS) verbunden ist, und wobei
- in dem vierten Fall
- die Steuerschaltung (SS) die Ladeschaltung (LS) sperrt, unabhängig davon, ob die am ersten Eingang (E1) der Steuerschaltung (SS) anliegende Spannung unterhalb oder oberhalb des Schwellwertes liegt, so dass das Modul (M) nicht mittels der Ladeschaltung (LS) mit Betriebsspannung aus der externen Spannungsquelle (ESQ) versorgt wird.

6. Spannungsversorgungsanordnung mit einer Steuerschaltung (SS) mit dem ersten Eingang (E1), dem zweiten Eingang (E2), dem dritten Eingang (E3), dem ersten Ausgang (A1) und dem zweiten Ausgang (A2), nach einem der vorstehenden Patentansprüche 1 oder 3 bis 5.

7. Spannungsversorgungsanordnung nach Anspruch 6, wobei in dem ersten Fall das Akkumulatortypelement (T) als Temperaturwiderstand ausgebildet ist.

8. Spannungsversorgungsanordnung nach Anspruch 6 oder 7, wobei in dem ersten Fall eine Erhaltungsladungsschaltung (ELS, die mit der externen Spannungsquelle (ESQ), dem zweiten Ausgang (A2) der Steuerschaltung (SS), dem Lithiumakkumulator und dem Modul (M) verbunden ist, bei vollständig entladenem Lithiumakkumulator ausgebildet ist, das Laden des Lithiumakkumulator zu steuern.

9. Spannungsversorgungsanordnung mit einer Steuerschaltung (SS) mit dem ersten Eingang (E1), dem zweiten Eingang (E2), dem dritten Eingang (E3) und dem ersten Ausgang (A1) nach einem der Patentansprüche 2 oder 3 bis 5.

10. Verfahren zur Spannungsversorgung eines Moduls (M) in einer Spannungsversorgungsanordnung nach einem der Ansprüche 6 bis 8, wobei
in dem ersten Fall
- die Steuerschaltung (SS) erkennt, ob die an dem ersten Eingang (E1) anliegende Spannung oberhalb oder unterhalb eines Schwellwertes liegt,
- die Steuerschaltung (SS) erkennt, dass ein interner elektrischer Energiespeicher (ISQK) mit dem zweiten Eingang (E2) der Steuerschaltung (SS) verbunden ist,
- die Steuerschaltung (SS) erkennt, dass ein --insbesondere als Temperaturwiderstand ausgebildete-- Akkumulatortypelement (T) mit dem dritten Eingang (E3) der Steuerschaltung (SS) verbunden ist, und wobei in dem ersten Fall,
- die Steuerschaltung (SS) den ersten Schalter (S) ausschaltet und die Ladeschaltung (LS) sperrt, wenn die am ersten Eingang (E1) anliegende Spannung unterhalb des Schwellwertes liegt, so dass die Betriebsspannung des Moduls (M) aus dem Lithiumakkumulator und nicht aus der externen Spannungsquelle (ESQ) bezogen wird und
- die Steuerschaltung (SS) den ersten Schalter (S) ausschaltet und die Ladeschaltung (LS) aktiviert, wenn die am ersten Eingang (E1) anliegende Spannung oberhalb des Schwellwertes liegt, so dass der Lithiumakkumulator während des Betriebs des Moduls (M) durch die externe Spannungsquelle (ESQ) mittels der Ladeschaltung (LS) geladen wird; wobei
in dem zweiten Fall
- die Steuerschaltung (SS) erkennt, ob die an dem ersten Eingang (E1) anliegende Spannung oberhalb oder unterhalb eines Schwellwertes liegt,
- die Steuerschaltung (SS) erkennt, dass ein interner elektrischer Energiespeicher (ISQK) mit dem zweiten Eingang (E2) der Steuerschaltung (SS) verbunden ist,
- die Steuerschaltung (SS) erkennt, dass kein Akkumulatortypelement (T) mit dem dritten Eingang (E3) der Steuerschaltung (SS) verbunden ist, und wobei in dem zweiten Fall,
- die Steuerschaltung (SS) den ersten Schalter (S) einschaltet, wenn die am ersten Eingang (E1) anliegende Spannung unterhalb des Schwellwertes liegt und
- den ersten Schalter (S) ausschaltet, wenn die am ersten Eingang (E1) anliegende Spannung oberhalb des Schwellwertes liegt, so dass am letzteren Unterfall das Modul (M) nicht mit Betriebsspannung aus der externen Spannungsquelle (ESQ) versorgt wird; und wobei
in dem dritten Fall
- die Steuerschaltung (SS) erkennt, ob die an dem ersten Eingang (E1) anliegende Spannung oberhalb oder unterhalb eines Schwellwertes liegt,
- die Steuerschaltung (SS) erkennt, dass ein interner elektrischer Energiespeicher (ISQK) mit dem zweiten Eingang (E2) der Steuerschaltung (SS) verbunden ist,
- die Steuerschaltung (SS) erkennt, dass kein Akkumulatortypelement (T) mit dem dritten Eingang (E3) der Steuerschaltung (SS) verbunden ist, und wobei in dem dritten Fall,
die Steuerschaltung (SS) den ersten Schalter (S) ausschaltet, unabhängig davon, ob die am ersten Eingang (E1) der Steuerschaltung (SS) anliegende Spannung unterhalb oder oberhalb des Schwellwertes liegt, so dass das Modul (M) nicht mit Betriebsspannung aus der externen Spannungsquelle (ESQ) versorgt wird; wobei
in dem vierten Fall,
- die Steuerschaltung (SS) erkennt, ob die an dem ersten Eingang (E1) anliegende Spannung oberhalb oder unterhalb eines Schwellwertes liegt,
- die Steuerschaltung (SS) erkennt, dass kein interner elektrischer Energiespeicher (ISQK) mit dem zweiten Eingang (E2) der Steuerschaltung (SS) verbunden ist,
- die Steuerschaltung (SS) erkennt, dass kein Akkumulatortypelement (T) mit dem dritten Eingang (E3) der Steuerschaltung (SS) verbunden ist, und wobei in dem vierten Fall
- die Steuerschaltung (SS) den ersten Schalter (S) einschaltet, wenn die am ersten Eingang (E1) der Steuerschaltung (SS) anliegende Spannung unterhalb des Schwellwertes liegt, so dass das Modul (M) mit Betriebsspannung aus der externen Spannungsquelle (ESQ) versorgt wird, und
- den ersten Schalter (S) ausschaltet, wenn die am ersten Eingang (E1) der Steuerschaltung (SS) anliegende Spannung oberhalb des Schwellwertes liegt, so dass das Modul (M) nicht mit Betriebsspannung aus der externen Spannungsquelle (ESQ) versorgt wird.

11. Verfahren zur Spannungsversorgung eines Moduls (M) in einer Spannungsversorgungsanordnung nach Anspruch 9, wobei
in dem zweiten Fall
- die Steuerschaltung (SS) erkennt, ob die an dem ersten Eingang (E1) anliegende Spannung oberhalb oder unterhalb eines Schwellwertes liegt,
- die Steuerschaltung (SS) erkennt, dass ein interner elektrischer Energiespeicher (ISQK) mit dem zweiten Eingang (E2) der Steuerschaltung (SS) verbunden ist,
- die Steuerschaltung (SS) erkennt, dass kein Akkumulatortypelement (T) mit dem dritten Eingang (E3) der Steuerschaltung (SS) verbunden ist, und wobei in dem zweiten Fall,
- die Steuerschaltung (SS) den ersten Schalter (S) einschaltet, wenn die am ersten Eingang (E1) anliegende Spannung unterhalb des Schwellwertes liegt und
- den ersten Schalter (S) ausschaltet, wenn die am ersten Eingang (E1) anliegende Spannung oberhalb des Schwellwertes liegt, so dass am letzteren Unterfall das Modul (M) nicht mit Betriebsspannung aus der externen Spannungsquelle (ESQ) versorgt wird; und wobei
in dem dritten Fall
- die Steuerschaltung (SS) erkennt, ob die an dem ersten Eingang (E1) anliegende Spannung oberhalb oder unterhalb eines Schwellwertes liegt,
- die Steuerschaltung (SS) erkennt, dass ein interner elektrischer Energiespeicher (ISQK) mit dem zweiten Eingang (E2) der Steuerschaltung (SS) verbunden ist,
- die Steuerschaltung (SS) erkennt, dass kein Akkumulatortypelement (T) mit dem dritten Eingang (E3) der Steuerschaltung (SS) verbunden ist, und wobei in dem dritten Fall,
die Steuerschaltung (SS) den ersten Schalter (S) ausschaltet, unabhängig davon, ob die am ersten Eingang (E1) der Steuerschaltung (SS) anliegende Spannung unterhalb oder oberhalb des Schwellwertes liegt, so dass das Modul (M) nicht mit Betriebsspannung aus der externen Spannungsquelle (ESQ) versorgt wird; wobei
in dem vierten Fall,
- die Steuerschaltung (SS) erkennt, ob die an dem ersten Eingang (E1) anliegende Spannung oberhalb oder unterhalb eines Schwellwertes liegt,
- die Steuerschaltung (SS) erkennt, dass kein interner elektrischer Energiespeicher (ISQK) mit dem zweiten Eingang (E2) der Steuerschaltung (SS) verbunden ist,
- die Steuerschaltung (SS) erkennt, dass kein Akkumulatortypelement (T) mit dem dritten Eingang (E3) der Steuerschaltung (SS) verbunden ist, und wobei in dem vierten Fall
- die Steuerschaltung (SS) den ersten Schalter (S) einschaltet, wenn die am ersten Eingang (E1) der Steuerschaltung (SS) anliegende Spannung unterhalb des Schwellwertes liegt, so dass das Modul (M) mit Betriebsspannung aus der externen Spannungsquelle (ESQ) versorgt wird, und
- den ersten Schalter (S) ausschaltet, wenn die am ersten Eingang (E1) der Steuerschaltung (SS) anliegende Spannung oberhalb des Schwellwertes liegt, so dass das Modul (M) nicht mit Betriebsspannung aus der externen Spannungsquelle (ESQ) versorgt wird.

12. Verfahren zur Spannungsversorgung nach Anspruch 10, wobei in dem ersten Fall eine Erhaltungsladungsschaltung (ELS), die mit der externen Spannungsquelle (ESQ), dem zweiten Ausgang (A2) der Steuerschaltung (SS), dem Lithiumakkumulator und dem Modul (M) verbunden ist, bei vollständig entladenem Lithiumakkumulator, das Laden des Lithiumakkumulator steuert.

13. Verfahren zur Spannungsversorgung nach Anspruch 10 oder 11, wobei in dem zweiten Fall
- die externe Spannungsquelle (ESQ) mit einer Ladeschaltung (LS) verbunden ist,
- die Ladeschaltung (LS) mit dem internen elektrischen Energiespeicher (ISQK) verbunden ist,
- ein zweiter Ausgang (A2) der Steuerschaltung (SS) mit der Ladeschaltung (LS) verbunden ist, wobei
in dem zweiten Fall,
- die Steuerschaltung (SS) die Ladeschaltung (LS) sperrt, unabhängig davon, ob die am ersten Eingang (E1) der Steuerschaltung (SS) anliegende Spannung unterhalb oder oberhalb des Schwellwertes liegt, so dass das Modul (M) nicht mittels der Ladeschaltung (LS) mit Betriebsspannung aus der externen Spannungsquelle (ESQ) versorgt wird.

14. Verfahren zur Spannungsversorgung nach Anspruch 10 oder 11, wobei in dem dritten Fall
- die externe Spannungsquelle (ESQ) mit einer Ladeschaltung (LS) verbunden ist,
- die Ladeschaltung (LS) mit dem internen elektrischen Energiespeicher (ISQK) verbunden ist,
- ein zweiter Ausgang (A2) der Steuerschaltung (SS) mit der Ladeschaltung (LS) verbunden ist, wobei
in dem dritten Fall,
- die Steuerschaltung (SS) die Ladeschaltung (LS) sperrt, unabhängig davon, ob die am ersten Eingang (E1) der Steuerschaltung (SS) anliegende Spannung unterhalb oder oberhalb des Schwellwertes liegt, so dass das Modul (M) nicht mit Betriebsspannung aus der externen Spannungsquelle (ESQ) versorgt wird.

15. Verfahren zur Spannungsversorgung nach Anspruch 10 oder 11, wobei in dem vierten Fall:
- die externe Spannungsquelle (ESQ) mit einer Ladeschaltung (LS) verbunden ist,
- die Ladeschaltung (LS) mit dem Betriebsspannungsversorgungseingang (BSPE) des Moduls (M) verbunden ist,
- ein zweiter Ausgang (A2) der Steuerschaltung (SS) mit der Ladeschaltung (LS) verbunden ist, wobei
in dem vierten Fall
- die Steuerschaltung (SS) die Ladeschaltung (LS) sperrt, unabhängig davon, ob die am ersten Eingang (E1) der Steuerschaltung (SS) anliegende Spannung unterhalb oder oberhalb des Schwellwertes liegt, so dass das Modul (M) nicht mittels der Ladeschaltung (LS) mit Betriebsspannung aus der externen Spannungsquelle (ESQ) versorgt wird.

## Claims

1. Control circuit (SS) for adapting a power supply arrangement, with a first input (E1), a second input (E2), a third input (E3), a first output (A1) and a second output (A2), wherein
- an external voltage source (ESQ) can be connected to the first input (E1) of the control circuit (SS), and
- an internal electrical energy store (ISQK) can be connected to the second input (E2) of the control circuit (SS), and
- an accumulator type element (T) can be connected to the third input (E3) of the control circuit (SS), and is suitable for switching it on or off, and
- the first output (A1) of the control circuit (SS) can be connected to a first switch (S), and
- the second output (A2) of the control circuit (SS) can be connected to a charging circuit (LS), and wherein
• in a first case of a power supply arrangement:
- the external voltage source (ESQ) is connected to the first input (E1) of the control circuit (SS),
• the external voltage source (ESQ) is connected to a first terminal of the first switch (S),
- the external voltage source (ESQ) is connected to the charging circuit (LS),
• the first switch (S) is connected at a second terminal to an operating voltage supply input (BSPE) of a module (M),
- the charging circuit (LS) is connected to an internal electrical energy store (ISQK) in the form of a lithium accumulator,
- the internal electrical energy store (ISQK) is connected to the second input (E2) of the control circuit (SS),
• the internal electrical energy store (ISQK) is connected to the second terminal of the first switch (S) and the operating voltage supply input (BSPE),
- the internal electrical energy store (ISQK) is connected to the accumulator type element (T),
- the accumulator type element (T) is connected to a third input (E3) of the control circuit (SS),
• the first output (A1) of the control circuit (SS) is connected to the first switch (S),
- the second output (A2) of the control circuit (SS) is connected to the charging circuit (LS), and wherein
- in the first case, the control circuit (SS) is designed
- to detect whether the voltage at the first input (E1) is above or below a threshold value, and
- to detect that the internal electrical energy store (ISQK) is connected to the second input (E2) of the control circuit (SS), and
- to detect that the accumulator type element (T) is connected to the third input (E3) of the control circuit (SS), and wherein
- in the first case,
- the control circuit (SS) switches off the first switch (S) and blocks the charging circuit (LS) if the voltage at the first input (E1) is below the threshold value, so that the operating voltage of the module (M) is drawn from the lithium accumulator and not from the external voltage source (ESQ), and
- the control circuit (SS) switches off the first switch (S) and activates the charging circuit (LS) if the voltage at the first input (E1) is above the threshold value, so that while the module (M) is operating the lithium accumulator is charged by the external voltage source (ESQ) by means of the charging circuit (LS);
• in a second case of a power supply arrangement:
- the external voltage source (ESQ) is connected to the first input (E1) of the control circuit (SS),
- the external voltage source (ESQ) is connected to a first terminal of the first switch (S),
- the first switch (S) is connected at a second terminal to an operating voltage supply input (BSPE) of a module (M),
- an internal electrical energy store (ISQK) in the form of a capacitor is connected to the second input (E2) of the control circuit (SS),
- the internal electrical energy store (ISQK) is connected to the second terminal of the first switch (S) and the operating voltage supply input (BSPE),
- the first output (A1) of the control circuit (SS) is connected to the first switch (S), and wherein
- in the second case, the control circuit (SS) is designed
- to detect whether the voltage at the first input (E1) is above or below a threshold value, and
- to detect that the internal electrical energy store (ISQK) is connected to the second input (E2) of the control circuit (SS), and
- to detect that no accumulator type element (T) is connected to the third input (E3) of the control circuit (SS), and wherein
- in the second case,
- the control circuit (SS) switches on the first switch (S) if the voltage at the first input (E1) is below the threshold value, and
- switches off the first switch (S) if the voltage at the first input (E1) is above the threshold value, so that in the latter sub-case the module (M) is not supplied with operating voltage from the external voltage source (ESQ);
• in a third case of a power supply arrangement:
- the external voltage source (ESQ) is connected to the first input (E1) of the control circuit (SS),
- the external voltage source (ESQ) is connected to a first terminal of the first switch (S),
- the first switch (S) is connected at a second terminal to an operating voltage supply input (BSPE) of a module (M),
- an internal electrical energy store (ISQK) in the form of a battery or standard accumulator is connected to the second input (E2) of the control circuit (SS),
- the internal electrical energy store (ISQK) is connected to the second terminal of the first switch (S) and the operating voltage supply input (BSPE),
- the first output (A1) of the control circuit (SS) is connected to first switch (S), and wherein
- in the third case, the control circuit (SS) is designed
- to detect whether the voltage at the first input (E1) is above or below a threshold value, and
- to detect that an internal electrical energy store (ISQK) is connected to the second input (E2) of the control circuit (SS), and
- to detect that no accumulator type element (T) is connected to the third input (E3) of the control circuit (SS), and wherein
- in the third case,
- the control circuit (SS) switches off the first switch (S), irrespective of whether the voltage at the first input (E1) of the control circuit (SS) is below or above the threshold value, so that the module (M) is not supplied with operating voltage from the external voltage source (ESQ);
• in a fourth case of a power supply arrangement:
- the external voltage source (ESQ) is connected to the first input (E1) of the control circuit (SS),
- the external voltage source (ESQ) is connected to a first terminal of the first switch (S),
- the first switch (S) is connected at a second terminal to an operating voltage supply input (BSPE) of a module (M),
- the first output (A1) of the control circuit (SS) is connected to the first switch (S), and wherein
- in the fourth case, the control circuit (SS) is designed
- to detect whether the voltage at the first input (E1) is above or below a threshold value, and
- to detect that no internal electrical energy store (ISQK) is connected to the second input (E2) of the control circuit (SS), and
- to detect that no accumulator type element (T) is connected to the third input (E3) of the control circuit (SS), and wherein
in the fourth case
- the control circuit (SS) switches on the first switch (S) if the voltage at the first input (E1) of the control circuit (SS) is below the threshold value, so that the module (M) is supplied with operating voltage from the external voltage source (ESQ), and
- switches off the first switch (S) if the voltage at the first input (E1) of the control circuit (SS) is above the threshold value, so that the module (M) is not supplied with operating voltage from the external voltage source (ESQ).

2. Control circuit (SS) for adapting a power supply arrangement, with a first input (E1), a second input (E2), a third input (E3) and a first output (A1), wherein
- an external voltage source (ESQ) can be connected to the first input (E1) of the control circuit (SS), and
- an internal electrical energy store (ISQK) can be connected to the second input (E2) of the control circuit (SS), and
- an accumulator type element (T) can be connected to the third input (E3) of the control circuit (SS), and is suitable for switching it on or off, and
- the first output (A1) of the control circuit (SS) can be connected to a first switch (S), and is suitable for switching it on or off, and wherein
• in a second case of a power supply arrangement:
- the external voltage source (ESQ) is connected to the first input (E1) of the control circuit (SS),
- the external voltage source (ESQ) is connected to a first terminal of the first switch (S),
- the first switch (S) is connected at a second terminal to an operating voltage supply input (BSPE) of a module (M),
- an internal electrical energy store (ISQK) in the form of a capacitor is connected to the second input (E2) of the control circuit (SS),
- the internal electrical energy store (ISQK) is connected to the second terminal of the first switch (S) and the operating voltage supply input (BSPE),
- the first output (A1) of the control circuit (SS) is connected to the first switch (S), and wherein
- in the second case, the control circuit (SS) is designed
- to detect whether the voltage at the first input (E1) is above or below a threshold value, and
- to detect that the internal electrical energy store (ISQK) is connected to the second input (E2) of the control circuit (SS), and
- to detect that no accumulator type element (T) is connected to the third input (E3) of the control circuit (SS), and wherein
- in the second case,
- the control circuit (SS) switches on the first switch (S) if the voltage at the first input (E1) is below the threshold value, and
- switches off the first switch (S) if the voltage at the first input (E1) is above the threshold value, so that in the latter sub-case the module (M) is not supplied with operating voltage from the external voltage source (ESQ);
• in a third case of a power supply arrangement:
- the external voltage source (ESQ) is connected to the first input (E1) of the control circuit (SS),
- the external voltage source (ESQ) is connected to a first terminal of the first switch (S),
- the first switch (S) is connected at a second terminal to an operating voltage supply input (BSPE) of a module (M),
- an internal electrical energy store (ISQK) in the form of a battery or standard accumulator is connected to the second input (E2) of the control circuit (SS),
- the internal electrical energy store (ISQK) is connected to the second terminal of the first switch (S) and the operating voltage supply input (BSPE),
- the first output (A1) of the control circuit (SS) is connected to first switch (S), and wherein
- in the third case, the control circuit (SS) is designed
- to detect whether the voltage at the first input (E1) is above or below a threshold value, and
- to detect that an internal electrical energy store (ISQK) is connected to the second input (E2) of the control circuit (SS), and
- to detect that no accumulator type element (T) is connected to the third input (E3) of the control circuit (SS), and wherein
- in the third case,
- the control circuit (SS) switches off the first switch (S), irrespective of whether the voltage at the first input (E1) of the control circuit (SS) is below or above the threshold value, so that the module (M) is not supplied with operating voltage from the external voltage source (ESQ) ;
• in a fourth case of a power supply arrangement:
- the external voltage source (ESQ) is connected to the first input (E1) of the control circuit (SS),
- the external voltage source (ESQ) is connected to a first terminal of the first switch (S),
- the first switch (S) is connected at a second terminal to an operating voltage supply input (BSPE) of a module (M),
- the first output (A1) of the control circuit (SS) is connected to the first switch (S), and wherein
- in the fourth case, the control circuit (SS) is designed
- to detect whether the voltage at the first input (E1) is above or below a threshold value, and
- to detect that no internal electrical energy store (ISQK) is connected to the second input (E2) of the control circuit (SS), and
- to detect that no accumulator type element (T) is connected to the third input (E3) of the control circuit (SS), and wherein
in the fourth case
- the control circuit (SS) switches on the first switch (S) if the voltage at the first input (E1) of the control circuit (SS) is below the threshold value, so that the module (M) is supplied with operating voltage from the external voltage source (ESQ), and
- switches off the first switch (S) if the voltage at the first input (E1) of the control circuit (SS) is above the threshold value, so that the module (M) is not supplied with operating voltage from the external voltage source (ESQ).

3. Control circuit (SS) according to Claim 1 or 2,
wherein in the second case of a power supply arrangement:
- the external voltage source (ESQ) is connected to a charging circuit (LS),
- the charging circuit (LS) is connected to the internal electrical energy store (ISQK),
- the second output (A2) of the control circuit (SS) is connected to the charging circuit (LS), and wherein
- in the second case,
- the control circuit (SS) blocks the charging circuit (LS), irrespective of whether the voltage at the first input (E1) of the control circuit (SS) is below or above the threshold value, so that the module (M) is not supplied with operating voltage from the external voltage source (ESQ) by means of the charging circuit (LS).

4. Control circuit (SS) according to Claim 1 or 2,
wherein in the third case of a power supply arrangement:
- the external voltage source (ESQ) is connected to a charging circuit (LS),
- the charging circuit (LS) is connected to the internal electrical energy store (ISQK),
- the second output (A2) of the control circuit (SS) is connected to the charging circuit (LS), and wherein
- in the third case,
- the control circuit (SS) blocks the charging circuit (LS), irrespective of whether the voltage at the first input (E1) of the control circuit (SS) is below or above the threshold value, so that the module (M) is not supplied with operating voltage from the external voltage source (ESQ).

5. Control circuit (SS) according to Claim 1 or 2,
wherein in the fourth case of a power supply arrangement:
- the external voltage source (ESQ) is connected to a charging circuit (LS),
- the charging circuit (LS) is connected to the operating voltage supply input (BSPE) of the module (M),
- the second output (A2) of the control circuit (SS) is connected to the charging circuit (LS), and wherein
- in the fourth case,
- the control circuit (SS) blocks the charging circuit (LS), irrespective of whether the voltage at the first input (E1) of the control circuit (SS) is below or above the threshold value, so that the module (M) is not supplied with operating voltage from the external voltage source (ESQ) by means of the charging circuit (LS).

6. Power supply arrangement with a control circuit (SS) with the first input (E1), second input (E2), third input (E3), first output (A1) and second output (A2) according to any one of the preceding Claims 1 or 3 to 5.

7. Power supply arrangement according to Claim 6, wherein in the first case the accumulator type element (T) is in the form of a temperature resistor.

8. Power supply arrangement according to Claim 6 or 7,
wherein in the first case a trickle-charging circuit (ELS), which is connected to the external voltage source (ESQ), the second output (A2) of the control circuit (SS), the lithium accumulator and the module (M), is designed to control the charging of the lithium accumulator when the lithium accumulator is fully discharged.

9. Power supply arrangement with a control circuit (SS) with the first input (E1), second input (E2), third input (E3) and first output (A1) according to any one of the preceding Claims 2 or 3 to 5.

10. Method for supplying power to a module (M) in a power supply arrangement according to any one of Claims 6 to 8, wherein
in the first case
- the control circuit (SS) detects whether the voltage at the first input (E1) is above or below a threshold value,
- the control circuit (SS) detects that an internal electrical energy store (ISQK) is connected to the second input (E2) of the control circuit (SS),
- the control circuit (SS) detects that an accumulator type element (T) - in particular in the form of a temperature resistor - is connected to the third input (E3) of the control circuit (SS), and wherein
in the first case,
- the control circuit (SS) switches off the first switch (S) and blocks the charging circuit (LS) if the voltage at the first input (E1) is below the threshold value, so that the operating voltage of the module (M) is drawn from the lithium accumulator and not from the external voltage source (ESQ), and
- the control circuit (SS) switches off the first switch (S) and activates the charging circuit (LS) if the voltage at the first input (E1) is above the threshold value, so that while the module (M) is operating the lithium accumulator is charged by the external voltage source (ESQ) by means of the charging circuit (LS); wherein
in the second case
- the control circuit (SS) detects whether the voltage at the first input (E1) is above or below a threshold value,
- the control circuit (SS) detects that an internal electrical energy store (ISQK) is connected to the second input (E2) of the control circuit (SS),
- the control circuit (SS) detects that no accumulator type element (T) is connected to the third input (E3) of the control circuit (SS), and wherein
in the second case,
- the control circuit (SS) switches on the first switch (S) if the voltage at the first input (E1) is below the threshold value, and
- switches off the first switch (S) if the voltage at the first input (E1) is above the threshold value, so that in the latter sub-case the module (M) is not supplied with operating voltage from the external voltage source (ESQ); and wherein
in the third case
- the control circuit (SS) detects whether the voltage at the first input (E1) is above or below a threshold value,
- the control circuit (SS) detects that an internal electrical energy store (ISQK) is connected to the second input (E2) of the control circuit (SS),
- the control circuit (SS) detects that no accumulator type element (T) is connected to the third input (E3) of the control circuit (SS), and wherein
in the third case,
the control circuit (SS) switches off the first switch (S), irrespective of whether the voltage at the first input (E1) of the control circuit (SS) is below or above the threshold value, so that the module (M) is not supplied with operating voltage from the external voltage source (ESQ); wherein
in the fourth case
- the control circuit (SS) detects whether the voltage at the first input (E1) is above or below a threshold value,
- the control circuit (SS) detects that no internal electrical energy store (ISQK) is connected to the second input (E2) of the control circuit (SS),
- the control circuit (SS) detects that no accumulator type element (T) is connected to the third input (E3) of the control circuit (SS), and wherein
in the fourth case,
- the control circuit (SS) switches on the first switch (S) if the voltage at the first input (E1) of the control circuit (SS) is below the threshold value, so that the module (M) is supplied with operating voltage from the external voltage source (ESQ), and
- switches off the first switch (S) if the voltage at the first input (E1) of the control circuit (SS) is above the threshold value, so that the module (M) is not supplied with operating voltage from the external voltage source (ESQ).

11. Method for supplying power to a module (M) in a power supply arrangement according to Claim 9, wherein
in the second case
- the control circuit (SS) detects whether the voltage at the first input (E1) is above or below a threshold value,
- the control circuit (SS) detects that an internal electrical energy store (ISQK) is connected to the second input (E2) of the control circuit (SS),
- the control circuit (SS) detects that no accumulator type element (T) is connected to the third input (E3) of the control circuit (SS), and
wherein
in the second case,
- the control circuit (SS) switches on the first switch (S) if the voltage at the first input (E1) is below the threshold value, and
- switches off the first switch (S) if the voltage at the first input (E1) is above the threshold value, so that in the latter sub-case the module (M) is not supplied with operating voltage from the external voltage source (ESQ); and wherein
in the third case
- the control circuit (SS) detects whether the voltage at the first input (E1) is above or below a threshold value,
- the control circuit (SS) detects that an internal electrical energy store (ISQK) is connected to the second input (E2) of the control circuit (SS),
- the control circuit (SS) detects that no accumulator type element (T) is connected to the third input (E3) of the control circuit (SS), and
wherein
in the third case,
the control circuit (SS) switches off the first switch (S), irrespective of whether the voltage at the first input (E1) of the control circuit (SS) is below or above the threshold value, so that the module (M) is not supplied with operating voltage from the external voltage source (ESQ); wherein
in the fourth case
- the control circuit (SS) detects whether the voltage at the first input (E1) is above or below a threshold value,
- the control circuit (SS) detects that no internal electrical energy store (ISQK) is connected to the second input (E2) of the control circuit (SS),
- the control circuit (SS) detects that no accumulator type element (T) is connected to the third input (E3) of the control circuit (SS), and
wherein
in the fourth case,
- the control circuit (SS) switches on the first switch (S) if the voltage at the first input (E1) of the control circuit (SS) is below the threshold value, so that the module (M) is supplied with operating voltage from the external voltage source (ESQ), and
- switches off the first switch (S) if the voltage at the first input (E1) of the control circuit (SS) is above the threshold value, so that the module (M) is not supplied with operating voltage from the external voltage source (ESQ).

12. Method for power supply according to Claim 10, wherein in the first case, a trickle-charging circuit (ELS), which is connected to the external voltage source (ESQ), the second output (A2) of the control circuit (SS), the lithium accumulator and the module (M), controls the charging of the lithium accumulator when the lithium accumulator is fully discharged.

13. Method for power supply according to Claim 10 or 11,
wherein
in the second case
- the external voltage source (ESQ) is connected to a charging circuit (LS),
- the charging circuit (LS) is connected to the internal electrical energy store (ISQK),
- a second output (A2) of the control circuit (SS) is connected to the charging circuit (LS), wherein
in the second case,
- the control circuit (SS) blocks the charging circuit (LS), irrespective of whether the voltage at the first input (E1) of the control circuit (SS) is below or above the threshold value, so that the module (M) is not supplied with operating voltage from the external voltage source (ESQ) by means of the charging circuit (LS).

14. Method for power supply according to Claim 10 or 11,
wherein
in the third case
- the external voltage source (ESQ) is connected to a charging circuit (LS),
- the charging circuit (LS) is connected to the internal electrical energy store (ISQK),
- a second output (A2) of the control circuit (SS) is connected to the charging circuit (LS), wherein
in the third case,
- the control circuit (SS) blocks the charging circuit (LS), irrespective of whether the voltage at the first input (E1) of the control circuit (SS) is below or above the threshold value, so that the module (M) is not supplied with operating voltage from the external voltage source (ESQ).

15. Method for power supply according to Claim 10 or 11,
wherein
in the fourth case
- the external voltage source (ESQ) is connected to a charging circuit (LS),
- the charging circuit (LS) is connected to the operating voltage supply input (BSPE) of the module (M),
- a second output (A2) of the control circuit (SS) is connected to the charging circuit (LS), wherein
in the fourth case,
- the control circuit (SS) blocks the charging circuit (LS), irrespective of whether the voltage at the first input (E1) of the control circuit (SS) is below or above the threshold value, so that the module (M) is not supplied with operating voltage from the external voltage source (ESQ) by means of the charging circuit (LS).

## Revendications

1. Circuit (SS) de commande pour l'adaptation d'un agencement d'alimentation en tension ayant une première entrée (E1), une deuxième entrée (E2), une troisième entrée (E3), une première sortie (A1) et une deuxième sortie (A2) dans lequel,
- une source (ESQ) extérieure de tension peut être reliée à la première entrée (E1) du circuit (SS) de commande, et
- un accumulateur (ISQK) intérieur d'énergie électrique peut être relié à la deuxième entrée du circuit (SS) de commande, et
- un élément (T) de type accumulateur peut être relié à la troisième entrée (E3) du circuit (SS) de commande et est propre à le mettre en circuit ou hors circuit, et
- la première sortie (A1) du circuit (SS) de commande peut être reliée à un premier commutateur (S), et
- la deuxième sortie (A2) du circuit (SS) de commande peut être reliée à un circuit (LS) de charge et lequel,
• dans un premier cas d'un agencement d'alimentation en tension :
- la source (ESQ) extérieure de tension est reliée à la première entrée (E1) du circuit (SS) de commande,
• la source (ESQ) extérieure de tension est reliée à une première borne du premier commutateur (S),
- la première source (ESQ) extérieure de tension est reliée au circuit (LS) de charge,
• le premier commutateur (S) est relié sur une deuxième borne à une entrée (BSPE) d'alimentation en tension de service d'un module (M),
- le circuit (lys) de charge est relié à un accumulateur (ISQK) intérieur d'énergie électrique constitué en accumulateur au lithium,
- l'accumulateur (ISQK) intérieur d'énergie électrique est relié à la deuxième entrée (E2) du circuit (SS) de commande,
• l'accumulateur (ISQK) intérieur d'énergie électrique est relié à la deuxième borne du premier commutateur (S) et à l'entrée (BSPE) d'alimentation en tension de service,
- l'accumulateur (ISQK) intérieur d'énergie électrique est relié à l'élément (T) de type accumulateur,
- l'élément (T) de type accumulateur est relié à une troisième entrée (E3) du circuit (SS) de commande,
• la première sortie (AI) du circuit (SS) de commande est reliée au premier commutateur (S),
- la deuxième sortie (A2) du circuit (SS) de commande est reliée au circuit (LS) de charge et dans lequel,
- dans le premier cas, le circuit (SS) de commande est constitué,
- pour détecter si la tension s'appliquant à la première entrée (E1) est supérieure ou est inférieure à une valeur de seuil, et
- pour détecter que l'accumulateur (ISQK) intérieur d'énergie électrique est relié à la deuxième entrée (E2) du circuit (SS) de commande, et
- pour détecter que l'élément (T) de type accumulateur est relié à la troisième entrée (ES) du circuit (SS) de commande et dans lequel,
- dans le premier cas,
- le circuit (SS) de commande ouvre le premier commutateur (S) et bloque le circuit (LS) de charge si la tension s'appliquant à la première entrée (E1) est inférieure à la valeur de seuil de sorte que la tension de service du module (M) est fournie par l'accumulateur au lithium et non par la source (ESQ) extérieure de tension, et
- le circuit (SS) de commande ouvre le premier commutateur (S) et active le circuit (LS) de charge si la tension s'appliquant à la première entrée (E1) est supérieure à la valeur de seuil de sorte que l'accumulateur au lithium est, pendant le fonctionnement du module (M), chargé par la source (ESQ) extérieure de tension au moyen du circuit (LS) de charge ;
• dans un deuxième cas d'un agencement d'alimentation en tension :
- la source (ESQ) extérieure de tension est reliée à la première entrée (E1) du circuit (SS) de commande,
- la source (ESQ) extérieure de tension est reliée à une première borne du premier commutateur (S),
- le premier commutateur (S) est relié sur une deuxième borne à une entrée (BSPE) d'alimentation en tension de service d'un module (M),
- un accumulateur (ISQK) intérieur d'énergie électrique constitué en condensateur est relié à la deuxième entrée (E2) du circuit (SS) de commande,
- l'accumulateur (ISQK) intérieur d'énergie électrique est relié à la deuxième borne du premier commutateur (S) et à l'entrée (BSPE) d'alimentation en tension de service,
- la première sortie (A1) du circuit (SS) de commande est reliée au premier commutateur (S) et dans lequel,
- dans le deuxième cas, le circuit (SS) de commande est constitué,
- pour détecter si la tension s'appliquant à la première entrée (E1) est supérieure ou est inférieure à une valeur de seuil, et
- pour détecter que l'accumulateur (ISQK) intérieur d'énergie électrique est relié à la deuxième entrée (E2) du circuit (SS) de commande, et
- pour détecter qu'un élément (T) de type accumulateur n'est pas relié à la troisième entrée (E3) du circuit (SS) de commande et dans lequel,
- dans le deuxième cas,
- le circuit (SS) de commande ferme le premier commutateur (S) si la tension s'appliquant à la première entrée (E1) est inférieure à la valeur de seuil, et
- ouvre le premier commutateur (S) si la tension s'appliquant à la première entrée (E1) est supérieure à la valeur de seuil de sorte que, dans le dernier sous-cas, le module (M) n'est pas alimenté en la tension de service par la source (ESQ) extérieure de tension ;
• dans un troisième cas d'un agencement d'alimentation en tension :
- la source (ESQ) extérieure de tension est reliée à la première entrée (E1) du circuit (SS) de commande,
- la source (ESQ) extérieure de tension est reliée à une première borne du premier commutateur (S),
- le premier commutateur (S) est relié sur une première borne à une entrée (BSPE) d'alimentation en tension de service d'un module (M),
- un accumulateur (ISQK) interne d'énergie électrique constituée en batterie ou en accumulateur standard est relié à la deuxième entrée (E2) du circuit (SS) de commande,
- l'accumulateur (ISQK) intérieur d'énergie électrique est relié à la deuxième borne du premier commutateur (S) et à l'entrée (BSPE) d'alimentation en tension de service,
- la première sortie (A1) du circuit (SS) de commande est reliée au premier commutateur (S) et dans lequel,
- dans le troisième cas, le circuit (SS) de commande est constitué,
- pour détecter si la tension s'appliquant à la première entrée (E1) est supérieure ou est inférieure à une valeur de seuil, et
- pour détecter qu'un accumulateur (ISQK) intérieur d'énergie électrique est relié à la deuxième entrée (E2) du circuit (SS) de commande, et
- pour détecter qu'un élément (T) de type accumulateur n'est pas relié à la troisième entrée (E3) du circuit (SS) de commande et dans lequel,
- dans le troisième cas,
- le circuit (SS) de commande ouvre le premier commutateur (S) indépendamment du point de savoir si la tension s'appliquant à la première entrée (E1) du circuit (SS) de commande est inférieure ou est supérieure à la valeur de seuil de sorte que le module (M) n'est pas alimenté en la tension de service par la source (ESQ) extérieure de tension ;
• dans un quatrième cas d'un agencement d'alimentation en tension :
- la source (ESQ) extérieure de tension est reliée à la première entrée (E1) du circuit (SS) de commande,
- la source (ESQ) extérieure de tension est reliée à une première borne du premier commutateur (S),
- le premier commutateur (S) est relié sur une deuxième borne à une entrée (BSPE) d'alimentation en tension de service d'un module (M),
- la première sortie (A1) du circuit (SS) de commande est reliée au premier commutateur (S) et dans lequel,
- dans le quatrième cas, le circuit (SS) de commande est constitué,
- pour détecter si la tension s'appliquant à la première entrée (E1) est supérieure ou est inférieure à une valeur de seuil, et
- pour détecter qu'un accumulateur (1SQK) intérieur d'énergie électrique n'est pas relié à la deuxième entrée (E2) du circuit (SS) de commande, et
- pour détecter qu'un élément (T) de type accumulateur n'est pas relié à la troisième entrée (E3) du circuit (SS) de commande et dans lequel,
- dans le quatrième cas,
- le circuit (SS) de commande ferme le premier commutateur (SS) si la tension s'appliquant à la première entrée (E1) du circuit (SS) de commande est inférieure à la valeur de seuil de sorte que le module (M) est alimenté en la tension de service par la source (ESQ) extérieure de tension,
- le premier commutateur (S) s'ouvre si la tension s'appliquant à la première entrée (E1) du circuit (SS) de commande est supérieure à la valeur de seuil de sorte que le module (M) n'est pas alimenté en tension de service par la source (ESQ) extérieure de tension.

2. Circuit (SS) de commande pour l'adaptation d'un agencement d'alimentation en tension ayant une première entrée (E1), une deuxième entrée (E2) une troisième entrée (E3) et une première sortie (A1), dans lequel
- une source (ESQ) extérieure de tension peut être reliée à la première entrée (E1) du circuit (SS) de commande, et
- un accumulateur (ISQK) intérieur d'énergie électrique peut être relié à la deuxième entrée du circuit (SS) de commande, et
- un élément (T) de type accumulateur peut être relié à la troisième entrée (E3) du circuit (SS) de commande et est propre à le mettre en circuit ou hors circuit, et
- la première sortie (AI) du circuit (SS) de commande peut être reliée à un premier commutateur (S), et
- la deuxième sortie (A2) du circuit (SS) de commande peut être reliée à un circuit (LS) de charge et dans lequel,
• dans un deuxième cas d'un agencement d'alimentation en tension :
- la source (ESQ) extérieure de tension est reliée à la première entrée (E1) du circuit (SS) de commande,
- la source (ESQ) extérieure de tension est reliée à une première borne du premier commutateur (S),
- le premier commutateur est relié sur une deuxième borne à une entrée (BSPE) d'alimentation de tension de service d'un module (M),
- un accumulateur (ISQK) intérieur d'énergie électrique constitué en condensateur est relié à la deuxième entrée (E2) du circuit (SS) de commande,
- l'accumulateur (ISQK) intérieur d'énergie électrique est relié à la deuxième borne du premier commutateur (S) et à l'entrée (BSPE) d'alimentation en tension de service,
- la première sortie (A1) du circuit (SS) de commande est reliée au premier commutateur (S) et dans lequel,
- dans le deuxième cas, le circuit (SS) de commande est constitué,
- pour détecter si la tension s'appliquant à la première borne (E1) est supérieure ou est inférieure à une valeur de seuil, et
- pour détecter que l'accumulateur (ISQK) intérieur d'énergie électrique est relié à la deuxième entrée (E2) du circuit (SS) de commande, et
- pour détecter qu'un élément (T) de type accumulateur n'est pas relié à la troisième entrée (E3) du circuit (SS) de commande et dans lequel,
- dans le deuxième cas,
- le circuit (SS) de commande ferme le premier commutateur si la tension s'appliquant à la première entrée (E1) est inférieure à la valeur de seuil, et
- le premier commutateur (S) s'ouvre si la tension s'appliquant à la première entrée (E1) est supérieure à la valeur de seuil de sorte que, dans le dernier sous-cas, le module (M) n'est pas alimenté en la tension de service par la source (ESQ) extérieure de tension ;
• dans un troisième cas d'un agencement d'alimentation en tension :
- la source (ESQ) extérieure de tension est reliée à la première entrée (E1) du circuit (SS) de commande,
- la source (ESQ) extérieure de tension est reliée à une première borne du premier commutateur (S),
- le premier commutateur (S) est relié sur une deuxième borne à une première entrée (BSPE) d'alimentation en tension de service d'un module (M),
- un accumulateur (ISQK) intérieur d'énergie électrique constitué en batterie ou en accumulateur standard est relié à la deuxième entrée (E2) du circuit (SS) de commande,
- l'accumulateur (ISQK) intérieur d'énergie électrique est relié à la deuxième borne du premier commutateur (S) et à l'entrée (BSPE) d'alimentation en tension de service,
- la première sortie (AI) du circuit (SS) de commande est reliée au premier commutateur (S) et dans lequel,
- dans le troisième cas, le circuit (SS) de commande est constitué,
- pour détecter si la tension s'appliquant à la première entrée (E1) est supérieure ou est inférieure à une valeur de seuil, et
- pour détecter qu'un accumulateur (ISQK) intérieur d'énergie électrique est relié à la deuxième entrée (E2) du circuit (SS) de commande, et
- pour détecter qu'un élément (T) de type accumulateur n'est pas relié à la troisième entrée (E3) du circuit (SS) de commande et dans lequel,
- dans le troisième cas,
- le circuit (SS) de commande ouvre le premier commutateur (S) indépendamment du point de savoir si la tension s'appliquant à la première entrée (E1) du circuit (SS) de commande est inférieure ou est supérieure à la valeur de seuil de sorte que le module (M) n'est pas alimenté en la tension de service par la source (ESQ) extérieure de tension ;
• dans un quatrième cas d'un agencement d'alimentation en tension :
- la source (ESQ) extérieure de tension est reliée à la première entrée (E1) du circuit (SS) de commande,
- la source (ESQ) extérieure de tension est reliée à une première borne du premier commutateur (S),
- le premier commutateur est relié sur une deuxième borne à une entrée (BSPE) d'alimentation en tension de service d'un module (M),
- la première sortie (A1) du circuit (SS) de commande est reliée au premier commutateur (S) et dans lequel,
- dans le quatrième cas, le circuit (SS) de commande est constitué,
- pour détecter si la tension s'appliquant à la première entrée (E1) est supérieure ou est inférieure à une valeur de seuil, et
- pour détecter qu'un accumulateur (ISQK) intérieur d'énergie électrique n'est pas relié à la deuxième entrée (E2) du circuit (SS) de commande, et
- pour détecter qu'un élément (T) de type accumulateur n'est as relié à la troisième entrée (E3) du' circuit (SS) de commande et dans lequel,
- dans le quatrième cas,
- le circuit (SS) de commande ferme le premier commutateur (S) si la tension s'appliquant à la première entrée (E1) du circuit (SS) de commande est inférieure à la valeur de seuil de sorte que le module (M) est alimenté en la tension de service par la première source (ESQ) extérieure de tension, et
- le premier commutateur (S) s'ouvre si la tension s'appliquant à la première entrée (E1) du circuit (SS) de commande est supérieure à la valeur de seuil de sorte que le module (M) n'est pas alimenté en la tension de service par la source (ESQ) extérieure de tension.

3. Circuit (SS) de commande suivant la revendication 1 ou 2, dans lequel le deuxième cas qu'un agencement d'alimentation en tension :
- la source (ESQ) extérieure de tension est reliée à un circuit (LS) de charge,
- le circuit (LS) de charge est relié à l'accumulateur (ISQK) intérieur d'énergie électrique,
- la deuxième sortie (A2) du circuit (SS) de commande est relié au circuit (LS) de charge et dans lequel,
- dans le deuxième cas,
- le circuit (SS) de commande bloque le circuit (LS) de charge indépendamment du point de savoir si la tension s'appliquant à la première entrée (E1) du circuit (SS) de commande est inférieure ou est supérieure à la valeur de charge de sorte que le module (M) n'est pas alimenté au moyen du circuit (LS) de charge en la tension de service par la source (ESQ) extérieure de tension.

4. Circuit (SS) de commande suivant la revendication 1 ou 2, dans lequel, dans le troisième cas d'un agencement d'alimentation en tension :
- la source (ESQ) extérieure de tension est reliée à un circuit (LS) de charge,
- le circuit (LS) de charge est relié à l'accumulateur (ISQK),
- la deuxième sortie (A2) du circuit (SS) de commande est reliée au circuit (LS) de charge et dans lequel,
- dans le troisième cas,
- le circuit (SS) de commande bloque le circuit (LS) de charge indépendamment du point de savoir si la tension s'appliquant à la première entrée (E1) du circuit (SS) de commande est inférieure ou est supérieure à la valeur de seuil de sorte que le module (M) n'est pas alimenté en la tension de service par la source (ESQ) extérieure de tension.

5. Circuit (SS) de commande suivant la revendication 1 ou 2, dans lequel, dans le quatrième cas d'un agencement d'alimentation en tension :
- la source (ESQ) extérieure de tension est reliée à un circuit (LS) de charge,
- le circuit (LS) de charge est relié à l'entrée (BSPE) d'alimentation en tension de service du module (M),
- la deuxième sortie (A2) du circuit (SS) de commande est reliée au circuit (LS) de charge et dans lequel,
- dans le quatrième cas,
- le circuit (SS) de commande bloque le circuit (LS) de charge indépendamment du point de savoir si la tension s'appliquant à la première entrée (E1) du circuit (SS) de commande est inférieure ou est supérieure à la valeur de seuil de sorte que le module (M) n'est pas alimenté au moyen du circuit (LS) de charge en la tension de service par la source (ESQ) extérieure de tension.

6. Agencement d'alimentation en tension comprenant un circuit (SS) de commande ayant la première entrée (E1), la deuxième entrée (E2), la troisième entrée (E3), la première sortie (A1) et la deuxième sortie (A2) suivant l'une des revendications précédentes 1 ou 3 à 5.

7. Agencement d'alimentation en tension suivant la revendication 6, dans lequel, dans le premier cas, l'élément (T) de type accumulateur est constitué en résistance de température.

8. Agencement d'alimentation en tension suivant la revendication 6 ou 7, dans lequel, dans le premier cas, un circuit (ELS) de chargement de maintien, qui est relié à la source (ESQ) extérieure de tension, à la deuxième sortie (A2) du circuit (SS) de commande à l'accumulateur au lithium et au module (M) est constitué pour, lorsque l'accumulateur au lithium est déchargé complètement, commander la charge de l'accumulateur au lithium.

9. Agencement d'alimentation en tension, comprenant un circuit (SS) de commande ayant la première entrée (E1), la deuxième entrée (E2), la troisième entrée (E3) et la première sortie (A1) suivant l'une des revendications 2 ou 3 à 5.

10. Procédé d'alimentation en tension d'un module (M) dans un agencement d'alimentation en tension suivant l'une des revendications 6 à 8, dans lequel,
dans le premier cas,
- le circuit (SS) de commande détecte si la tension s'appliquant à la première entrée (E1) est supérieure ou est inférieure à une valeur de seuil,
- le circuit (SS) de commande détecte qu'un accumulateur (ISQK) intérieur d'énergie électrique est relié à la deuxième entrée (E2) du circuit (SS) de commande,
- le circuit (SS) de commande détecte qu'un élément (T) de type accumulateur-constitué notamment en résistance de température-est relié à la troisième entrée (E3) du circuit (SS) de commande et dans lequel, dans le premier cas,
- le circuit (SS) de commande ouvre le premier commutateur (S) et bloque le circuit (LS) de charge si la tension s'appliquant à la première entrée (E1) est inférieure à la valeur de seuil de sorte que la tension de service du module (M) est fournie par l'accumulateur au lithium et ne l'est pas par la source (ESQ) extérieure de tension et
- le circuit (SS) de commande ouvre le premier commutateur (S) et active le circuit (LS) de charge si la tension s'appliquant à la première entrée (E1) est supérieure à la valeur de seuil de sorte que l'accumulateur au lithium est pendant le fonctionnement du module (M), chargé par la source (ESQ) extérieure de tension au moyen du circuit (LS) de charge ; dans lequel,
dans le deuxième cas,
- le circuit (SS) de commande détecte si la tension s'appliquant à la première entrée (E1) est supérieure ou est inférieure à une valeur de seuil,
- le circuit (SS) de commande détecte qu'un accumulateur (ISQK) intérieur d'énergie électrique est relié à la deuxième entrée (E2) du circuit (SS) de commande,
- le circuit (SS) de commande détecte qu'un élément (T) de type accumulateur n'est pas relié à la troisième entrée (E3) du circuit (SS) de commande et dans lequel, dans le deuxième cas,
- le circuit (SS) de commande ferme le premier commutateur (S) si la tension s'appliquant à la première entrée (E1) est inférieure à la valeur de seuil et
- ouvre le premier commutateur (S) si la tension s'appliquant à la première entrée (E1) est supérieure à la valeur de seuil de sorte que, dans le dernier sous-cas, le module (M) n'est pas alimenté en la tension de service par la source (ESQ) extérieure de tension ; et dans lequel, dans le troisième cas,
- le circuit (SS) de commande détecte si la tension s'appliquant à la première entrée (E1) est supérieure ou est inférieure à une valeur de seuil,
- le circuit (SS) de commande détecte qu'un accumulateur (ISQK) intérieur d'énergie électrique est relié à la deuxième entrée (E2) du circuit (SS) de commande,
- le circuit (SS) de commande détecte qu'un élément (T) de type accumulateur n'est pas relié à la troisième entrée (E3) du circuit (SS) de commande et dans lequel dans le troisième cas,
- le circuit (SS) de commande ouvre le premier commutateur (S) indépendamment du point de savoir si la tension s'appliquant à la première entrée (E1) du circuit (SS) de commande est inférieure ou est supérieure à la valeur de seuil de sorte que le module (M) n'est pas alimenté en la tension de service par la source (ESQ) extérieure de tension ; dans lequel,
dans le quatrième cas,
- le circuit (SS) de commande détecte si la tension s'appliquant à la première entrée (E1) est supérieure ou est inférieure à une valeur de seuil,
- le circuit (SS) de commande détecte qu'un accumulateur (ISQK) intérieur d'énergie électrique n'est pas relié à la deuxième entrée (E2) du circuit (SS) de commande,
- le circuit (SS) de commande détecte qu'un élément (T) de type accumulateur n'est pas relié à la troisième entrée (E3) du circuit (SS) de commande et dans lequel, dans le quatrième cas,
- le circuit (SS) de commande détecte qu'un élément (T) de type accumulateur n'est pas relié à la troisième entrée (E3) du circuit (SS) de commande et dans lequel, dans le quatrième cas,
- le circuit (SS) de commande ferme le premier commutateur (S) si la tension s'appliquant à la première entrée (E1) du circuit (SS) de commande est inférieure à la valeur de seuil de sorte que le module (M) est alimenté en la tension de service par la première source (ESQ) extérieure de tension, et
- ouvre le premier commutateur (S) si la tension s'appliquant à la première entrée (E1) du circuit (SS) de commande est supérieure à la valeur de seuil de sorte que le module (M) n'est pas alimenté en la tension de service par la source (ESQ) extérieure de tension.

11. Procédé d'alimentation en tension d'un module (M) dans un agencement d'alimentation en tension suivant la revendication 9, dans lequel,
dans le deuxième cas
- le circuit (SS) de commande détecte si la tension s'appliquant à la première entrée (E1) est supérieure ou est inférieure à une valeur de seuil,
- le circuit (SS) de commande détecte qu'un accumulateur (ISQK) intérieur d'énergie électrique est relié à la deuxième entrée (E2) du circuit (SS) de commande,
- le circuit (SS) de commande détecte qu'un élément (T) de type accumulateur n'est pas relié à la troisième entrée (E3) du circuit (SS) de commande et dans lequel, dans le deuxième cas,
- le circuit (SS) de commande ferme le premier commutateur (S) si la tension s'appliquant à la première entrée (E1) est inférieure à la valeur de seuil et,
- ouvre le premier commutateur (S) si la tension s'appliquant à la première entrée (E1) est supérieure à la valeur de seuil de sorte que, dans le dernier sous-cas, le module (M) n'est pas alimenté à la tension de service par la source (ESQ) extérieure de tension ; et dans lequel, dans le troisième cas,
- le circuit (SS) de commande détecte si la tension s'appliquant à la première entrée (E1) est supérieure ou est inférieure à une valeur de seuil,
- le circuit (SS) de commande détecte qu'un accumulateur (ISQK) intérieur d'énergie électrique est relié à la deuxième entrée (E2) du circuit (SS) de commande,
- le circuit (SS) de commande détecte qu'un élément (T) de type accumulateur n'est pas relié à la troisième entrée (E3) du circuit (SS) de commande et dans lequel, dans le troisième cas,
le circuit de commande ouvre le premier commutateur (S) indépendamment du point de savoir si la tension s'appliquant à la première entrée (E1) du circuit (SS) de commande est inférieure ou est supérieure à la valeur de seuil de sorte que le module (M) n'est pas alimenté à la tension de service par la source (ESQ) extérieure de tension ; dans lequel,
dans le quatrième cas,
- le circuit (SS) de commande détecte si la tension s'appliquant à la première entrée (E1) est supérieure ou est inférieure à une valeur de seuil,
- le circuit (SS) de commande détecte qu'un accumulateur (ISQK) intérieur d'énergie électrique n'est pas relié à la deuxième entrée (E2) du circuit (SS) de commande,
- le circuit (SS) de commande détecte qu'un élément (T) de type accumulateur n'est pas relié à la troisième entrée (E3) du circuit (SS) de commande et dans lequel, dans le quatrième cas,
- le circuit (SS) de commande ferme le premier commutateur (S) si la tension s'appliquant à la première entrée (E1) du circuit (SS) de commande est inférieure à la valeur de seuil de sorte que le module (M) est alimenté en la tension de service par la source (ESQ) extérieure de tension, et
- ouvre le premier commutateur (S) si la tension s'appliquant à la première entrée (E1) du circuit (SS) de commande est supérieure à la valeur de seuil de sorte que le module (M) n'est pas alimenté en la tension de service par la source (ESQ) extérieure de tension.

12. Procédé d'alimentation en tension suivant la revendication 10, dans lequel, dans le premier cas, un circuit (ELS) de chargement de maintien, qui est relié à la source (ESQ) extérieure de tension, à la deuxième sortie (A2) du circuit (SS) de commande, à l'accumulateur au lithium et au module (M), commande lorsque, l'accumulateur au lithium est déchargé complètement, la charge de l'accumulateur au lithium.

13. Procédé d'alimentation en tension suivant la revendication 10 ou 11, dans lequel, dans le deuxième cas,
- la source (ESQ) extérieure de tension est reliée à un circuit (LS) de charge,
- le circuit (LS) de charge est relié à l'accumulateur (ISQK) intérieur d'énergie électrique,
- une deuxième sortie (A2) du circuit (SS) de commande est reliée au circuit (LS) de charge, dans lequel,
dans le quatrième cas,
- le circuit (SS) de commande bloque le circuit (LS) de charge indépendamment du point de savoir si la tension s'appliquant à la première entrée (E1) du circuit (SS) de commande est inférieure ou est supérieure à la valeur de seuil de sorte que le module (M) n'est pas alimenté au moyen du circuit (LS) de charge en la tension de service par la source (ESQ) extérieure de tension.

14. Procédé d'alimentation en tension suivant la revendication 10 ou 11, dans lequel, dans le troisième cas,
- la source (ESQ) extérieure de tension est reliée à un circuit (LS) de charge,
- le circuit (LS) de charge est relié à l'accumulateur (ISQK) intérieur d'énergie électrique,
- une deuxième sortie (A2) du circuit (SS) de commande est reliée au circuit (LS) de charge, dans lequel,
dans le troisième cas,
- le circuit (SS) de commande bloque le circuit (LS) de charge indépendamment du point de savoir si la tension s'appliquant à la première entrée (E1) du circuit (SS) de commande est inférieure ou est supérieure à la valeur de seuil de sorte que le module (M) n'est pas alimenté en la tension de service par la source (ESQ) extérieure de tension.

15. Procédé d'alimentation en tension suivant la revendication 10 ou 11, dans lequel, dans le quatrième cas,
- la source (ESQ) extérieure de tension est reliée à un circuit (LS) de charge,
- le circuit (LS) de charge est relié à l'entrée (BSPE) d'alimentation en tension de service du module (M),
- une deuxième sortie (A2) du circuit (SS) de commande est reliée au circuit (LS) de charge, dans lequel,
dans le quatrième cas,
- le circuit (SS) de commande bloque le circuit (LS) de charge indépendamment du point de savoir si la tension s'appliquant à la première entrée (E1) du circuit (SS) de commande est inférieure ou est supérieure à la valeur de seuil de sorte que le module (M) n'est pas alimenté au moyen du circuit (LS) de charge en la tension de service par la source (ESQ) extérieure de tension.
